# EUROPEAN PATENT SPECIFICATION

(11) **EP 2 741 642 B1**
(45) Date of publication and mention of the grant of the patent: **29.06.2016**
(21) Application number: 12761771.0
(22) Date of filing: 10.08.2012
(51) Int. Cl.: A47J 27/21

(54) **CONTROLS FOR A LIQUID HEATING APPARATUS**
STEUERUNGEN FÜR EINE FLÜSSIGKEITSERHITZUNGSVORRICHTUNG
COMMANDES POUR UN DISPOSITIF DE CHAUFFAGE DE LIQUIDES

(30) Priority: 10.08.2011 GB 201113780; 06.03.2012 GB 201203956
(43) Date of publication of application: 18.06.2014
(73) Proprietor: Strix Limited, Ronaldsway, Isle of Man IM9 2RG (GB)
(72) Inventor: GARVEY, Vincent Joseph, Colby Isle of Man IM9 4BF (GB)
(74) Representative: Ramsay, Laura Anne
(86) International application number: PCT/GB2012/051959
(87) International publication number: WO 2012/164319

(56) References cited:
- WO-A1-95/08204
- WO-A1-95/34187
- WO-A1-2008/144805
- WO-A2-01/28294
- FR-A1- 2 842 088
- GB-A- 2 292 841
- GB-A- 2 331 848
- GB-A- 2 439 657

## Description

This invention relates to controls for controlling a liquid heating apparatus, e.g. to switch the apparatus off when water is boiling or to prevent overheating, and to assemblies and appliances incorporating such controls.

A traditional electric kettle or hot water jug is equipped with a boiling control which, when liquid in the vessel boils, operates to disconnect the power supply to the heater of the vessel and so to discontinue boiling. Similarly an overheat control can be provided which disconnects the power supply when the heater exceeds a safe operating temperature.

Typically such overheat controls fall into one of two categories: cycling and non-cycling. The simplest arrangements are cycling ones in which contacts are opened by thermally responsive actuators in response to an overheat condition to interrupt current to the heating element, but wherein once the element has cooled down again such that the actuator resets, power will be restored and the element will heat up once more. This cycle will generally continue until the apparatus is positively switched off by the user. Such arrangements can meet safety standards but are considered undesirable in some applications as they are wasteful of power and can be disconcerting for users.

Non-cycling arrangements typically include some sort of trip-lever which is acted on by an over-centre spring so that when the thermally responsive actuator operates, it moves the trip lever past its over-centre position to a stable position in which the associated contacts are held open. This means that current is interrupted until the user positively switches the apparatus on again by moving the trip lever back to its original position. It is also common in such arrangements for a further mechanism to act on the trip lever to move it to its open position when a cordless appliance is lifted off its power base. This is beneficial in ensuring that the appliance does not start to reheat unexpectedly when the user puts it back down (which is more likely to be with little or no water in it after having poured out heated water). WO 95/34187 discloses a control comprising leaf springs to open its contacts and thereby disrupt electrical supply to the heating element, in addition to a cordless electrical connector.

Although the non-cycling function that trip levers can give is beneficial, this comes at a cost through needing at least one extra moving part, e.g. an extra over-centre spring etc.

The present invention aims to provide an improved and/or more cost-effective arrangement and when viewed from a first aspect provides a control assembly for a cordless liquid heating apparatus according to claim 1.

Thus it will be seen by those skilled in the art that in accordance with the present invention there is provided a simple non-cycling control arrangement, that does not require a trip lever, and in which switching is carried out using contacts divided between the control and cordless base connector.

By having the moving contact member in the control and the fixed contact on the cordless base connector, a considerable advantage can be achieved in that fewer current-carrying contact pairs are required overall than in more conventional arrangements where there are contacts between two distinct cordless connector parts and also in the control of the appliance for switching power - e.g. to prevent the element overheating. Instead the switch arrangement recited herein can also carry out the function of the necessary separable electrical connection between the control in the liquid heating apparatus and the cordless base connector - i.e. it becomes part of the cordless connection system instead of a distinct connector part provided on the control just for making the electrical cordless connection. This is advantageous as such contact pairs typically require silver on each side and this gives rise to a significant proportion of the manufacturing cost of the control. The elimination of a set of contacts is also beneficial in reducing the number of moving parts in the control which further reduces manufacturing costs.

There are many possible physical arrangements that could be used for the blocking member to move into place automatically. It could, for example, be subject to a resilient bias. In a set of embodiments the blocking member is arranged to move under gravity to said blocking position. It could for example be arranged to slide or pivot into the blocking position. In a set of embodiments the blocking member is arranged to bear against the moveable contact member or a switch lever carrying the moveable contact member, such that the blocking member is held away from its blocking position when the moveable contact member is in contact with the fixed contact but such that when the moveable contact member is separated from the fixed contact, the blocking member is no longer held and so is able to move to said blocking position.

There may be several reasons why the moveable contact member and fixed contact might be separated. In a preferred set of embodiments the moveable contact member is acted on directly or indirectly by a temperature-sensitive actuator which is mounted on the control such that when the control is mounted in a liquid heating apparatus the temperature-sensitive actuator makes thermal contact with, and is sensitive to, the temperature of the liquid heating apparatus, the temperature-sensitive actuator being arranged to act on the moveable contact member, or a switch lever to which it is mounted, such that the moveable contact member is moved away from the fixed contact when the liquid heating apparatus reaches a predetermined temperature condition.

The temperature-sensitive actuator could, for example, be arranged to detect an overheat condition of the liquid heating apparatus, or when a predetermined liquid temperature is reached in use, or when steam is generated indicating boiling, and thereby to operate.

The control could have an automatic arrangement to remove the blocking member and allow the contacts to re-close. In a set of preferred embodiments however a manually operable means is provided for removing the blocking member and thereby allowing the contacts to re-close. The manually operable means for removing the blocking member could also be arranged to force the contacts closed - e.g. against the force of a temperature-sensitive actuator tending to open the contacts. In some embodiments however the manually operable means is not able to close the contacts, but merely to remove the blocking member. This can help to prevent a heater in the apparatus being re-energised if there is no liquid in it even though a user may be trying to force the liquid heating apparatus into an 'on' position via the manually operable means. In a set of embodiments however the user can force a steam switch closed in order to re-boil the liquid in the apparatus.

Additionally or alternatively the blocking member may be arranged such that it moves into the blocking position when the control is lifted from the cordless base connector. Ideally in such embodiments the blocking member remains in the blocking position when the control is replaced on the cordless base connector. In a set of embodiments the blocking member is arranged so that it is urged towards a stable blocking position by the action of placing the control on the cordless base connector.

Although not essential, in a set of preferred embodiments the blocking member is arranged to bear in use on the top of the cordless base connector when the control is placed or replaced on the connector. This allows the blocking member to move to the blocking position when the control is lifted from the cordless base connector such that the moveable contact member is moved away from the fixed contact when the control is replaced by the reaction of the blocking member against the cordless base connector. As mentioned above this action may urge the blocking member into a more stable blocking position. In a convenient arrangement the blocking member is arranged such that when it is moved towards a disengagement position to allow the contacts to re-close, it locates into a recess in the cordless base connector, thereby accommodating a downward movement to bring the contacts together. In a particularly convenient arrangement said recess is a slot or aperture which receives a conductor of the control. Where, as is preferred, the cordless base connector is of the 360 degree type in which electrical connection can be made at any, or substantially any, mutual angular orientation, the recess could, for example, be the annular slot which receives a ring conductor.

The blocking member can, at least in accordance with preferred embodiments, provide a convenient mechanism for switching the appliance off simply by momentarily lifting it from the cordless base. The Applicant has realised that this means that it may no longer be necessary to provide a manual "off" switch thereby reducing the overall number of components and so increasing the reliability of the control. Thus is a set of embodiments there is provided a control, control assembly and liquid heating apparatus in which no manual "off" control is provided.

In a set of embodiments the moveable contact member is mounted on a switch lever. In a set of such embodiments the control comprises resilient means, separate from and acting on the switch lever, so as to bias the moveable contact member into electrical contact with the fixed contact.

It will thus be appreciated that unlike in arrangements employing leaf springs, such an arrangement decouples the mechanical and electrical properties of the structure carrying the moveable contact member, as the contact member is mounted on a lever which may be stiff (i.e. does not itself need to be resilient) and may include complex geometric features not easily provided in simple springs or conductors, whilst the biasing force necessary for good electrical contact is provided by separate resilient means, e.g. a spring. This enables the most appropriate material for each component to be chosen. Previously, as the biasing force and the electrical conductivity of the moveable electrical contact were provided by the same component in the control, e.g. a leaf spring, a compromise had to be made between the necessary functional properties of the two different operational requirements when choosing the material to use. It is advantageous to be able to use a stiff switch lever since this allows its movement, and thus movement of the contact member to be predictable and reliable. In one non-limiting example the resilient force can be provided by a spring made of spring steel; the conductor can be made of braided or stranded copper wire and the complex mechanical details to contain the entire assembly in a rigid structure can be moulded from plastic.

Moreover since the switch lever in the control of the invention is resiliently biased to give the necessary contact pressure, it is not necessary to provide a resiliently biased contact in the cordless base connector which makes it more robust and allows more cost-effective manufacture.

Having the moveable contact member on a switch lever is particularly beneficial when a temperature-sensitive actuator, such as a snap-acting bimetallic actuator, acts on the lever to separate the contacts. Here the nature of a lever can be exploited, e.g. by arranging the ratios of the lever such that the pivot is closer to the actuator than to the moveable contact member - i.e. so that the movement of the actuator is amplified by the lever. The lever can also be exploited to allow the relatively small force exerted by the actuator to be amplified in order to open the moveable contact member against its relatively high bias force which is required when a higher contact pressure is desired. This creates a safer control as the relatively small distance of travel of an actuator such as a snap-acting bimetallic actuator can be amplified into a larger distance of travel of the moveable contact member, ensuring that there is adequate separation from the fixed contact to meet safety standards.

The switch arrangement described herein could be used to switch either pole of the mains electrical supply to the apparatus. In a set of embodiments it switches the live pole. In some embodiments though a further temperature-sensitive actuator is arranged to act directly or indirectly on a moveable contact member forming part of a switch arrangement for the neutral pole. In some embodiments however a blocking member as described herein is not provided for the neutral switch arrangement.

In accordance with the invention as set out above there is a fixed contact in the cordless base connector. In a set of preferred embodiments both the live and neutral electrical contacts in the cordless base connector are fixed - i.e. they are not required to move relative to a housing of the connector in order to provide the switching motion necessary to make and break the associated electrical circuit. The applicant has appreciated that this is advantageous as it can allow the cordless base connector to be reduced in height. It may also facilitate manufacture of the cordless base connector - e.g. by injection moulding. In particular it facilitates production of a cordless base connector comprising a sub-assembly in which the fixed contacts are permanently attached to respective conductors in the power supply cable. This is advantageous as it allows customisation of the sub-assembly to suit the electrical requirements of a particular country rather than a generic connector component which must be engineered to suit the most rigorous requirements even though these may not be relevant for a given application. Most preferably the contacts in the cordless base connector are end-point contacts - i.e. contacts adapted to engage with a corresponding contact on a distal end of a conductor rather than a surface contact such as an annular ring. Such end-point contacts can facilitate liquid shedding if the cordless base connector becomes wet during use.

Although the Applicant has recognised an advantage to having fixed end-point conductors in the cordless base connector, this presents a difficulty in applying the principle of using the cordless connection as part of the switching arrangement when it is desired to have a 360 degree, or substantially 360 degree - e.g. over 345 degree, cordless connection. In a set of embodiments however the control is provided with a moveable contact member having an annular contact surface. This is counter-intuitive since it runs contrary to the general principle that moving parts and moving contacts especially should be as small as possible, However it stems from the Applicant's realisation of the benefits of having fixed end-point contacts in the cordless base connector.

As discussed above, by providing a single switch arrangement and fixed contact(s) in the cordless base connector, the height of this connector can be reduced as compared to conventional base connectors and this represents a saving in terms of materials and storage/transport costs. As previously mentioned the fixed contact is preferably an end-point contact and preferably the cordless base connector comprises end-point contacts for both the live and neutral poles.

The contact member with the annular surface may be in either the live or neutral pole. Where, as is discussed in greater detail below, the control is arranged such that in use independent switching of the live and neutral poles is provided for, but one of the poles is arranged to switch preferentially in use, it is advantageous that the annular surface is in the non-preferred pole since this obviates the need to provide a significant layer of silver on the annular surface. Again, this is explained further below.

Another issue which the Applicant has appreciated and addressed which derives from having fixed end-point contacts in a 360 degree cordless connector and thus a moving conductor having an annular surface, is that it is desirable to limit the amount of movement which the annular contact has to undergo. On the other hand the mass production of mating components at minimum cost would normally suggest that a large movement would be necessary to ensure adequate contact pressure through a range of compounded manufacturing tolerances.

In a set of embodiments however at least one of the control or cordless base connector comprises a single datum point disposed on a substrate thereof and arranged in use to bear on the other component to set an accurate mating separation therebetween. In a set of embodiments the datum point is disposed on a substrate of the control and is adapted to bear on a sub-assembly of the connector which carries the fixed end-point contacts. The substrate of the control will typically be made from a high grade engineering plastic and thus a tight tolerance for the datum point can be achieved. By ensuring that the moveable contact members have a known relationship to the control substrate, such an arrangement allows the total travel necessary to ensure a given minimum contact pressure to be minimised. It also allows more cosmetic housing components to have wider tolerances which reduces manufacturing costs - e.g. by allowing less expensive plastics to be used.

The Applicant has further appreciated however that the provision of a single datum point, whilst beneficial in some circumstances, introduces the problem of the apparatus being unstable or rocking about the single point when it is seated on the base. In a set of embodiments therefore the liquid heating apparatus has at least one and preferably two resilient portions - e.g. supports. These could be provided on the underside of the apparatus and arranged to bear on the cordless base or on the base and arranged to receive the lower surface of the apparatus. This can stabilise the apparatus. A pair of supports is advantageous as a stable base can thereby be assured under the 'tripod' principle (with the datum point being the third 'leg' of the tripod).

The resilient portions could be relatively more resilient sections of a continuous surface or could be discrete supports. One option would be to provide independently sprung supports, although in a convenient set of embodiments the supports comprise portions of the housing of the apparatus or base part which have been relieved from the rest of the surface to provide sprung cantilevered tongues. This gives the required resilience with no additional manufacturing cost. It may be aesthetically preferable to provide the supports on the underside of the housing of the appliance part in the form of feet as they will not then be visible in normal use.

The Applicant has also devised further features which assist in the relative vertical location of the control.

In one set of embodiments the control comprises a substantially planar vertical mounting member on which the switch arrangement e.g. switch lever(s), moveable contact member(s) and/or the resilient means are mounted. It will be appreciated that a substantially planar vertical mounting member provides a robust and rigid support for a control. Typically such controls are arranged to be mounted on the underside of a heater or diffuser plate of a liquid heating appliance. This plate will flex when the heater is energised, but a substantially planar mounting member arranged in the vertical direction, i.e. perpendicular to the heater or diffuser plate, will not be susceptible to movement in this direction. Therefore the control will be held in the same position throughout the heating cycle, allowing its components, particularly those which move, to be accurately located.

In a set of embodiments the control comprises one or more thermally sensitive actuators, e.g. bimetallic actuators, mounted on the mounting member. Typically a control comprises three thermally sensitive actuators: two overheat or boil-dry sensors and one boil detection (e.g. steam) sensor. Using the mounting member to position the thermally sensitive actuators allows them to be accurately positioned, e.g. up against the heater or diffuser plate of the liquid heating apparatus. For example, this allows a bimetallic actuator to be positioned so that it just touches the relevant part of the liquid heating apparatus, thereby enabling only a small area of the bimetallic actuator to contact, e.g. the heating element. As the thermally sensitive actuators are generally the most important components to accurately position on the control relative to the liquid heating apparatus, preferably the control comprises means, e.g. rivets or screws, to attach the control to the liquid heating appliance in close proximity to the thermally sensitive actuators. Preferably rating stops are provided on the mounting member immediately proximate to the thermally sensitive portion of the actuator, providing even better location relative to the heater. The rating stops are preferably designed to be slightly 'proud' of the nominal position achieved when the control is fully engaged with the heater in order to prevent excessive force being applied to the actuator. Therefore even if there is some distortion in the heater or diffuser plate of the liquid heating apparatus, the thermally sensitive actuators will be kept in the same relative position.

In one set of embodiments the mounting member is arranged to limit the distance of travel of at least one part of the thermally sensitive actuator, e.g. by means of a stop on the mounting member. Preferably the thermally sensitive actuator is arranged to be in contact with the mounting member. For example, if a thermally sensitive bimetallic actuator is provided, and is mounted on the mounting member by its central tongue, the mounting member could also limit the distance of travel of the edge of the bimetallic actuator. This would result in an increased distance of travel for the opposite edge of the bimetallic actuator as the constraint in movement of one edge of the actuator will tend to tilt the plane of the actuator somewhat and so amplify the movement of the opposite edge. As will be appreciated, this becomes important in an arrangement in which the thermally sensitive actuator acts directly on a moveable contact member or a switch lever carrying the same, i.e. the movement of the thermally sensitive actuator is not amplified by an intermediate leaf spring.

In a set of preferred embodiments the mounting member further comprises one or more rating stops. These control the spacing between the actuator(s) and the heater surface. This arrangement enables the sensitive thermal actuator to be held in precise alignment with the heating surface without any risk of imposing stresses which may affect its thermal 'switching point'.

The bimetallic actuators could be mounted to the mounting member in a conventional way - e.g. using a rivet or the like. In a set of embodiments however at least one bimetallic actuator is mounted to the mounting member by means of a hook-and-eye arrangement. This allows for easier assembly and removes the need for rivets or the like, thereby reducing complexity. Preferably the hook and eye are arranged so that when the actuator is in its normal position it is prevented from moving relative to the mounting member to the extent that it would be possible for the hook to become disengaged from the eye. For example the arrangement could be such that the actuator is retained between the hook-and-eye arrangement but prevented from sliding by a suitable protrusion on the mounting member. This could be such as to allow the actuator to be fitted by passing the hook through the eye and then rotating the actuator relative to the mounting member so that an edge of the actuator clips behind such protrusion. Conveniently the hook is provided on the mounting member and the eye on the actuator. This has been found to allow both pieces easily to be stamped from respective metal sheets.

Preferably the mounting member comprises an integral earth connection. Providing an integrated mount and earth connection made from the same material dispenses of the need to provide these as separate components and therefore increases the reliability of the control. Preferably the earth connection is annular to suit it for use with a su bstantially 360 degree cordless connector. However in some embodiments the connector may not allow full 360° relative to the orientation of the control, but while still allowing electrical connection to be made substantially irrespective of this orientation, e.g. through a range of 345° or greater. It will be appreciated of course that this indicates that the substantially planar vertical mounting member could be part of a larger component which is not all planar.

In one set of embodiments of the invention, the control comprises a moveable contact member mounted on a switch lever, wherein the switch lever is pivotally mounted on the mounting member. Mounting the switch lever as well as the thermally sensitive actuator (which acts on the switch lever) on the mounting member provides a fixed relative position for these two components. Therefore even if the mounting member is moved when the liquid heating apparatus is in operation, e.g. by distortion of the heater plate, the switch lever does not move relative to the thermally sensitive actuator. This fixed positioning of these components independent of thermal movements of the base is beneficial as it allows a very small lost motion to be designed in between them which in turn allows as much of the movement of the actuator as possible to be translated into movement of the moveable contact member (possibly via a switch lever) where there is a direct coupling between the two as in preferred embodiments of the invention.

As is mentioned above, the control is particularly well-suited for use with a cordless electrical appliance comprising a connector part of the 360°-type, that is, an appliance connector part that can be brought into engagement with a corresponding base connector part provided by a power base unit regardless, or substantially regardless, of the relative angular orientation of the two parts. The cordless connector system may include two or three electrical terminals (e.g. live, neutral and optionally earth) for basic power connection, such as the Strix P72, or a larger number of terminals for additional electrical/data connections, such as the Strix P76. Examples of suitable cordless connector systems are described in the Applicant's published applications WO 95/08204 and WO 01/28294. In particular, the appliance connector part may be in the form of a male connector part comprising one or more annular terminals and the base connector part may be in the form of a female connector part comprising one or more corresponding annular recesses.

In a set of embodiments the apparatus comprises a switch arrangement for making or breaking a circuit supplying power to a heating element in the apparatus, the switch arrangement comprising a contact in the control and a contact in the cordless base connector. Preferably the switch arrangement comprises a moveable contact member in the control and a fixed contact on the cordless base connector. The moveable contact member is preferably mounted to the mounting member.
In embodiments of the invention the moveable contact member could comprise a leaf-spring. In a set of embodiments however the control comprises a switch arrangement for making or breaking a circuit supplying power to the heating element in the appliance part, the switch arrangement comprising a moveable contact member mounted on a switch lever provided on the control, and resilient means, separate from and acting on the switch lever, so as to bias the moveable contact member into electrical contact with a fixed contact. The switch lever could be mounted to the mounting member or to a control substrate fixedly attached to said mounting member. The fixed contact could be in the control or in the cordless base connector.

In a typical cordless connector system there are two sets of silver-coated or silver-tipped contacts, one set of contacts provided between a control unit and the electrical terminals of the appliance connector part, and another set of contacts in the base connector part. As is discussed above, one of the objects of the present invention is to make the electrical connections in an appliance more robust and one way of achieving this, together with a material saving, is to reduce the number of contacts by providing a moveable contact member mounted on a switch lever. When the control is part of a cordless appliance then this object also applies to the contacts in the base connector part. The electrical contacts in the base connector part may be mounted on leaf springs which are themselves connected to the power supply for the base unit, as is conventional (i.e. contacts other than the fixed contact recited hereinabove). Alternatively, as discussed above, the electrical contacts in the base connector part may be fixed.

Mains electrical power is usually supplied by a cable e.g. led to the base connector by a cable guide in the power base unit. However the Applicant has recognised a benefit in reducing the number of separate parts comprised in the power base unit and in integrating the cordless base connector with its power supply cable. Thus according to a preferred set of embodiments the cordless base connector comprises a sub-assembly comprising a mains power supply cable and at least one electrical contact, in which the electrical contact is permanently attached to a respective conductor in the mains power supply cable. An integrated sub-assembly comprising the electrical contact(s) permanently attached to the conductor(s) of a mains power supply cable can ensure that the contact(s), or at least a contact surface thereof, have an appropriate current rating regardless of the design of the rest of the connector or further manufacturing steps involved. As is mentioned above, the electrical contact(s) may provide electrical contact for the live and/or neutral poles of the power supply cable.

It will be appreciated that such a sub-assembly provides a new approach to making cordless connectors for mains electrical power supply. Previously the cordless connectors, or at least the base connector part thereof, would be manufactured as a generic item that has its contacts removably attached, e.g. via "Faston" tab connectors, to a mains power supply cable rated for the expected current when used in a particular country. However, this approach requires the electrical contacts in the connector to be over-designed for many applications just so that they can safely switch high currents e.g. in appliances connected to the Japanese or US mains power supply. By integrating the mains power supply cable with the electrical contact(s) in a sub-assembly before assembling the connector, the materials used for the electrical contact(s), or at least a contact surface thereof, can be matched to the current to be supplied by the mains power cable. To take advantage of the contact(s) being matched to a mains power supply cable, it is preferable that the thickness of a silver layer at least on the contact surface of the live electrical contact member is selected depending on the current rating of the power supply cable.

In one set of embodiments each electrical contact comprises an integral contact member having a contact surface and a body that is permanently attached to a conductor in the power supply cable. The attachment point may, for example, be at one end of the contact member distal from the contact surface. This can make it easier to separate the point of attachment from the point of electrical connection. Preferably the electrical contacts in the connector part are end-point contacts - i.e. providing an end-point contact surface adapted to engage with a corresponding contact on a distal end of a conductor rather than an extended surface contact such as an annular ring. Preferably the connector part comprises end-point contacts for both the live and neutral poles.

The electrical contact(s) may be permanently attached to respective conductor(s) in the power supply cable by any suitable means. In one set of embodiments the contacts may, for example, be welded, soldered, or brazed to the conductor(s). The contact(s) may even be adhesively attached to the conductors. In a preferred set of embodiments the contact(s)), or contact members thereof, are permanently attached to the conductor(s) by mechanical deformation e.g. by crimping to form a gas-tight connection. Such a permanent connection may then be protected by an integral moulding e.g. a plastics overmoulding that covers the point of attachment. The overmoulding can help to avoid oxidation at the attachment point when a copper member is attached to a copper conductor. In one set of embodiments the attachment point of the electrical contact(s) may be integrally moulded with the power supply cable, for example with the plastic sheathing of the cable being moulded around at least part of the conductor(s) and a part of the contact(s), or contact member(s), while the contact surfaces are left exposed. Such a moulded sub-assembly may then be incorporated into a connector part that provides a housing for the contact(s), preferably preventing direct access to the contact surfaces. The housing may be moulded from different plastics. However, in at least some embodiments the power supply cable may be integrally moulded with a connector part (or portion thereof) so that the integral moulding comprises a single plastics part that houses the contact(s).

It will be appreciated that integrally moulding the power supply cable with the cordless base connector, or at least a main part of that connector, can make the electrical connections more robust with the protection provided by the moulded plastic part. Assembly of the power base unit may also be simplified as the single plastic moulded part can be fitted to the base unit without the need for any separate fasteners for the power supply cable. The integrally moulded part can conveniently be snap fitted to the base unit in a single assembly step. Any further components of the base connector, such as a cover or the like, may also be attached to the main moulded part, e.g. with a snap-fit. A cover can provide a safety feature, preventing access to the (exposed) live parts.

When the cordless base connector is integrally moulded with the power supply cable it may be possible for the electrical contact(s) to connect to the conductor(s) in the power supply cable via conventional leaf springs, but this would likely complicate the moulding as it would have to be formed with internal spaces to accommodate the movement of the contact member(s) when mounted on leaf springs. Therefore, it is further preferred that the contact(s), or rather the body of the contact members, have a static connection with the conductor(s) in the power supply. Such a static connection may be encapsulated by the plastic moulding without interfering with the operation of the connector, i.e. switching current at the contact surface, and with the benefit of making the connection more durable. Such static or fixed contact(s) may be ideally suited for engagement with the electrical terminals of a control in an appliance part that comprises a moveable contact member mounted on a switch lever, as described above. To reduce the number of parts and increase reliability, preferably the contact(s), or rather the body of the contact members, are directly connected with the conductor(s) in the power supply. The integrity of the electrical connections in the base unit are thereby further improved.

In one set of embodiments the live and neutral contacts may comprise a static connection, while the earth contact comprises a leaf spring. Preferably, at least the live and neutral contacts are housed by the integrally moulded part. Although the earth contact could also be within the integrally moulded housing, in a set of embodiments the earth contact projects from the integrally moulded housing. The projecting earth contact may be connected by a leaf spring without complicating the moulding operation, because the outside periphery of the housing can be accessible for shut-off features in the mould tool.

The moveable contact member preferably comprises a material which is a good electrical conductor, e.g. copper. In a set of embodiments the moveable contact member comprises a silver coating or tip. Silver is chosen for its high electrical conductivity which reduces the tendency for deterioration of the contact surface through oxidation, but it is only provided as a coating or at the tip, i.e. where the physical contact with the fixed contact is made, in order to reduce the cost of the contact while maximising the effectiveness of the silver. It is similarly preferred that the contact surface of the fixed contact comprises silver. However the Applicant has found that using silver on one side only, i.e. on either the moveable contact member or the fixed contact, when the opposing side is copper, provides an adequate performance. This is because the plasma generated during arcing, as the contacts open, causes the silver on the one contact to melt, resulting in a layer of silver being deposited on the opposite contact.

As mentioned previously in a set of embodiments where overheat actuators are provided to act on both the live and neutral poles, the actuator associated with the live pole is arranged preferentially to act first in normal use (primary) - e.g. because this allows only the live contact members to have silver contact surfaces. This can be done by, for example, arranging the overheat temperature-sensitive actuator associated with the live pole to be closer to a sheathed heating element than the overheat temperature-sensitive actuator associated with the neutral pole (secondary). In one set of embodiments the overheat temperature-sensitive actuator associated with the live pole comprises a bimetallic actuator mounted on or adjacent the sheathed heating element. In one set of embodiments the overheat temperature-sensitive actuator associated with the neutral pole comprises a bimetallic actuator mounted more thermally remote from the sheathed heating element, e.g. between the cold tails of a sheathed element mounted beneath the base of a liquid heating chamber (underfloor heater).

In one set of embodiments this neutral pole or secondary overheat actuator is arranged not to be able to be reset if it operates, i.e. it permanently holds the associated contact open. This provides an additional level of safety. A latching mechanism associated with this secondary actuator could be provided to hold open the respective contacts and/or to retain the actuator in an operated state. However, the Applicant has observed that even a remotely located secondary actuator can operate after the live pole or primary actuator, i.e. the actuator mounted closer to the sheathed heating element, has operated owing to the residual thermal energy dissipating through the heater, e.g. via a heater or diffuser plate (thermal overshoot). To prevent this happening, in a set of embodiments the control is mounted in a liquid heating apparatus comprising a heater or diffuser plate which comprises means to disrupt the direct thermal path from the sheathed heating element to the secondary overheat actuator. The disrupting means could comprise holes, gaps, slots, walls, baffles, etc, formed in the heater or diffuser plate, or additional thermal masses in thermal contact with the heater or diffuser plate.

However the Applicant has also devised a further approach which addresses the thermal overshoot issue in the control itself (i.e. without requiring any particular measures on a heating element diffuser plate etc.). Thus in a set of embodiments the control comprises a primary overheat temperature-sensitive actuator for interrupting the supply of power to a heating element in the liquid heating apparatus by opening a first (primary) switch arrangement in the event of said heating element overheating and a secondary overheat temperature-sensitive actuator for interrupting the supply of power to the heating element by opening a second (secondary) switch arrangement in the event of said primary actuator failing to operate, wherein the primary actuator is arranged in normal use to operate before the secondary actuator in the event of said heating element overheating and wherein the first and second switch arrangements have a relationship which is such that if the second switch arrangement independently opens before the first switch arrangement a latch is engaged which prevents one or both of said first and second switch arrangements from reclosing to supply power to the heating element, but if said first switch arrangement opens before the second switch arrangement, said latch is not engaged.

Thus it will be seen by those skilled in the art that in accordance with these embodiments of the invention a latch is provided which is engaged specifically when the second switch arrangement is opened before the first. As will be appreciated, since the primary actuator is designed to operate first in normal use, such a sequence of events is indicative of a fault condition of some kind. This can, in some circumstances, be beneficial compared to an arrangement in which a thermal fuse or other conventional 'one-shot' overheat protector is provided since it nonetheless allows for the secondary actuator to operate, albeit after the primary actuator. Unless the operating temperature of the secondary actuator is much higher than that of the primary and/or it is in much poorer thermal contact with the element, both of which can increase the time taken for the secondary to operate should it ever be required, thermal overshoot can result in the secondary operating even after the heater has been switched off by the primary. In accordance with the features described above however, it is possible to achieve the safety benefit of disabling the apparatus in the event of a fault condition without compromising the speed with which the apparatus can respond to such a fault condition.

In one set of embodiments the primary and secondary actuators have different nominal operating temperatures. This can assist in ensuring that the primary operates first. Additionally or alternatively in a set of embodiments, as previously discussed in respect of the earlier embodiments of the invention, the primary and secondary actuators may have differing degrees of thermal contact with the sheathed heating element. This can be done by, for example, arranging the primary temperature-sensitive actuator to be closer to the sheathed heating element than the secondary temperature-sensitive actuator. In one set of embodiments the primary overheat temperature-sensitive actuator comprises a bimetallic actuator mounted on or adjacent to the sheathed heating element. In one set of embodiments the secondary overheat temperature-sensitive actuator comprises a bimetallic actuator mounted more thermally remote from the sheathed heating element, e.g. between the cold tails of a sheathed element mounted beneath the base of a liquid heating chamber (underfloor heater).

The switching arrangements could be arranged in series with one another - e.g. in a single pole of the mains power supply. In a set of embodiments however they are in respective poles. Preferably the primary actuator is in the live pole and the secondary in the neutral pole but this is not essential.

The above-described latch which is operable dependent on the order of operation of the actuators could be arranged such that it is resettable by a user. Since its operation is indicative of a fault condition it is considered preferable that a different, possibly more discreet, reset mechanism is provided than for the primary actuator (if that is arranged to latch - which it may in some embodiments, e.g. by means of the blocking member described earlier). In a set of embodiments however the above-described latch is arranged to be non-resettable, thereby preventing an apparatus having an otherwise potentially dangerous fault from being used further.

There are many mechanisms possible for the latch described hereinabove. In a set of embodiments the latch comprises a blocking member arranged automatically to move to prevent the second switch arrangement from reclosing when it is open but the first switch arrangement is not. For example, the first and second switch arrangements could comprise respective switch levers and a blocking member depending from the second lever and arranged such that it moves to block the second lever when the second lever is in its open position but wherein such movement of the blocking member is prevented by the first lever being in its open position. Many other mechanisms are possible of course.

One or both of the switch arrangements comprises a moveable contact member in the control and a fixed contact in the cordless base connector.

Certain embodiments of the invention will now be described, by way of example only, with reference to the accompanying drawings in which:
Figs. 1 and 2 show a control and a cordless base connector part for a liquid heating apparatus in accordance with an illustrative example;
Fig. 3 shows a close-up view of the underside of the control seen in Figs. 1 and 2;
Figs. 4 to 9 show different views of some of the switching components of the control seen in Figs. 1 to 3;
Fig. 10 is a perspective view of a power base unit for a cordless electrical appliance;
Fig. 11 is partial cross-sectional view of the power base unit seen in Fig. 10;
Fig. 12 is an exploded close-up of the cross-sectional view of Fig. 11; and
Fig. 13 is an exploded, perspective view of the moulded connector part seen in Figs. 10 to 12;
Fig. 14 shows a control and cordless base connector for a liquid heating apparatus in accordance with an embodiment of the present invention;
Fig. 15 shows a close-up view of the underside of the control seen in Fig. 14;
Fig. 16 shows a close-up view of the top side of the control seen in Fig. 14;
Fig. 17 is an exploded view of some of the switching components of the control seen in Figs. 14 to 16;
Fig. 18a is a partial perspective view of the main chassis of the control seen in Figs. 14 to 17, and
Fig. 18b is an exploded view of the chassis;
Fig. 19 is an exploded perspective view of the base connector part;
Fig. 20a is a close-up of the connector part seen in Fig. 19;
Fig. 20b is a cross-sectional view taken through the close-up of Fig. 20a;
Fig. 21 shows the control and base connector part of Figs. 14-19 in the configuration when a cordless liquid heating apparatus is placed on its base but before the control has been manually switched on;
Fig. 22a is a partial cross-sectional view of the configuration seen in Fig. 21, showing the blocking member in a blocking position, and Fig. 22b is a partial detail showing the blocking member in a disengagement position instead;
Fig. 23a shows the configuration of the control before it is turned on, Fig. 23b shows the configuration of the control after a user switches on the liquid heating apparatus, and Fig. 23c shows the configuration of the control after it is switched off, either manually or by operation of a steam sensor;
Fig. 24a shows the configuration of the control after operation of a primary actuator; Fig. 24b shows the configuration of the control after operation of a primary actuator followed by a secondary actuator; and Fig. 24c shows the configuration of the control after abnormal operation of a secondary actuator before a primary actuator;
Fig. 25a is a partial perspective view of the latch mechanism in the control, Fig. 25b is a partial perspective view of the latch mechanism in the control when in normal use, and Fig. 25c is a partial perspective view of the latch mechanism in the control in an abnormal overheat situation; and
Fig. 26 is schematic view of a cordless liquid heating apparatus.

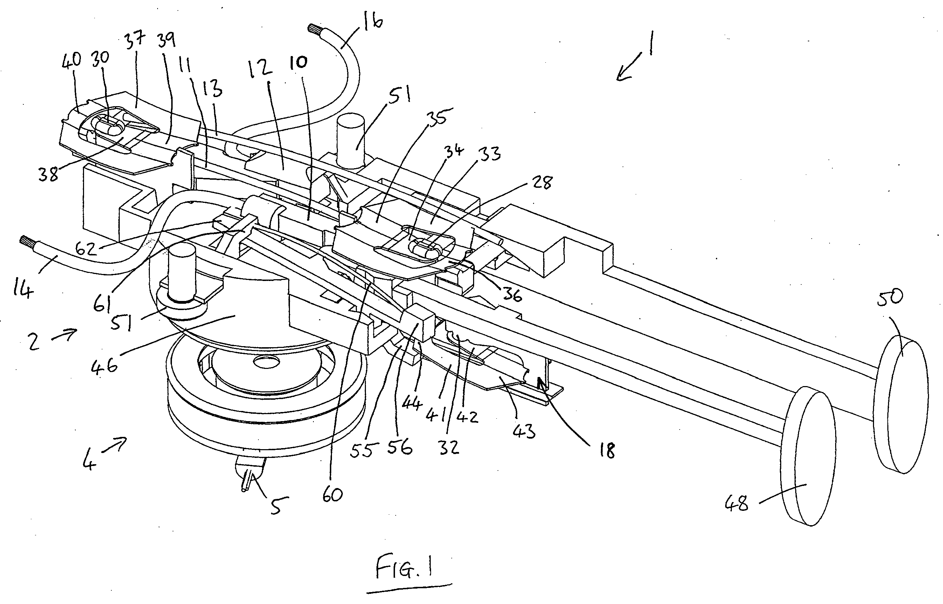

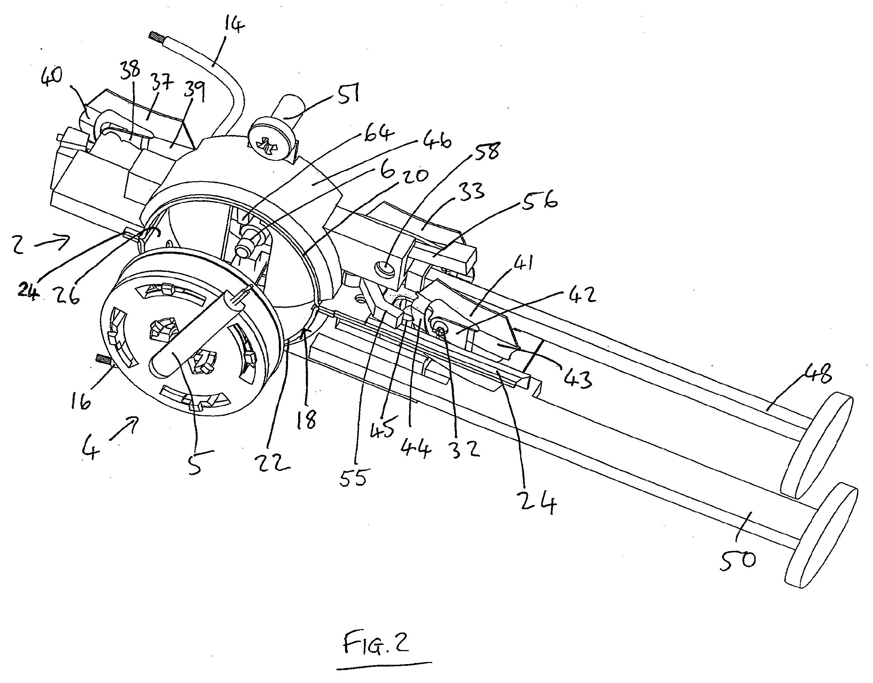

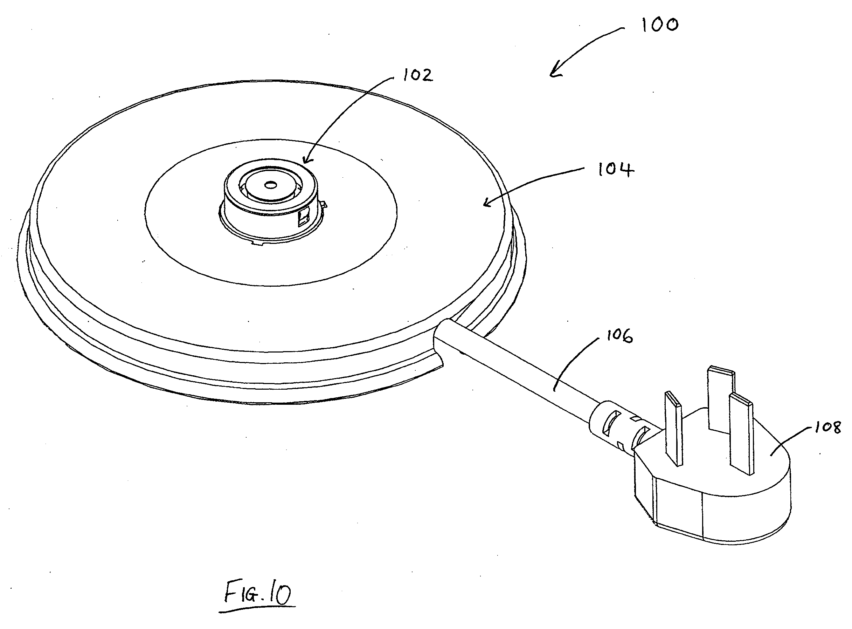

There is seen in Figs. 1 and 2 a control 1 for a cordless liquid heating apparatus, from above and below respectively. The control 1 comprises: an upper part 2 including an integral cordless electrical connector; and a base cordless electrical connector part 4. When incorporated into a liquid heating apparatus, the upper part 2 is housed in the bottom of the apparatus, and the base electrical connector part 4 is housed in a cordless power base unit (see Figs. 10 to 13 for an example of a power base unit compatible with the control 1). The base electrical connector part 4, 102 contains fixed live, neutral and earth contacts 112, 114, 116 (see Figs. 10 to 13). The live contact 112 comprises a contact member having a silver contact surface. A power lead 5, 106 carries the live, neutral and earth wires away from the base electrical connector part 4, 102 for connection to a mains power supply (not shown).

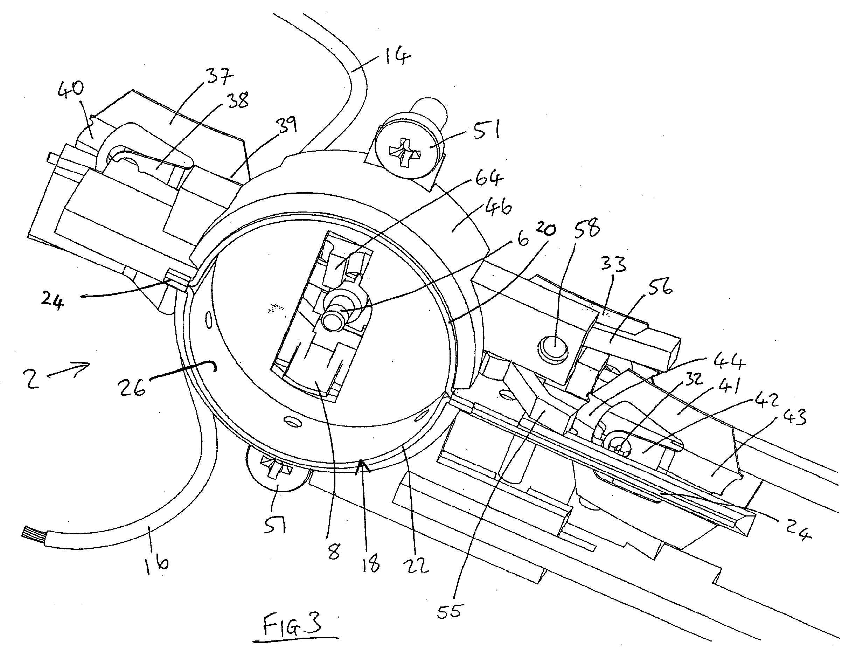

As can be better seen in Fig. 3 which shows the underside of the upper part 2 of the control, the upper part 2 of the control 1 houses a moveable live contact member 6 which has a circular contact surface and a moveable neutral contact member 8 having a gently curved, elongate contact surface. Each of the contact members 6, 8 is housed in a respective plastic switch lever 10, 12 which can be seen in Figs. 1 and 4 to 9 and will be described in more detail hereinbelow.

From Figs. 1 and 3 it may be seen that leading from the plastic switch lever 10 for the live contact member 6 and connected to the moveable live contact member 6 is an insulated wire 14 for connection to the live side of an electric heating element in the liquid heating apparatus (not shown). Correspondingly, an insulated wire 16 is led into the switch lever 12 to connect to the moveable neutral contact member 8.

Each of the switch levers 10, 12 is acted on by a respective wire spring 11, 13 that biases the respective moveable contact member 6, 8 downwards, i.e. towards the corresponding fixed contacts in the base electrical connector part 4, 102. The live contact member 6 comprises a silver contact surface for contact with the silver contact surface on the live contact 112 in the base electrical connector part 4, 102. The neutral contact member 8 is gently curved for passing through an annular channel in the base electrical connector part 4, 102 and making contact with a ring shaped neutral contact 114 therein.

Referring now to Fig. 2, an earth contact member 26 is provided as an integral part of a steel vertical mount plate 18. The vertical mount plate 18 comprises two half sections 20, 22 fixed together to form a spine 24 either side of a central cylindrical section which forms the ring-shaped earth contact member 26. The earth contact member 26 is arranged to form a mating connection around the base electrical connector part 4, 102.

The spine 24 of the vertical mount plate 18 includes three tabs 28, 30, 32 onto which respective thermally sensitive snap-acting bimetallic actuators 33, 37, 41 are mounted. The bimetallic actuators 33, 37, 41 are shown in their low temperature configurations, i.e. each is designed to snap into a reverse curvature configuration (relative to that shown) above a certain temperature. The two bimetallic actuators 33, 37 on the upper side of the vertical mount plate 18, i.e. an outer face of the control, are arranged to be in thermal contact with the heater plate and/or the heating element (not shown) of the liquid heating apparatus when the control is mounted to the underside of the heater plate, and to act as overheat sensors. The bimetallic actuator 41 on the lower side of the vertical mount plate 18 is arranged to be in fluid communication with the end of a steam tube (not shown) from the liquid heating apparatus, and acts as a boiling sensor. The bimetallic actuators 33, 37, 41 are each mounted on the vertical mount plate 18 through holes in their respective central tongues 34, 38, 42, but they also contact the vertical mount plate at their bases 35, 39, 43 such that when they snap at their actuating temperature, only the hoop 36, 40, 44 of the actuator moves.

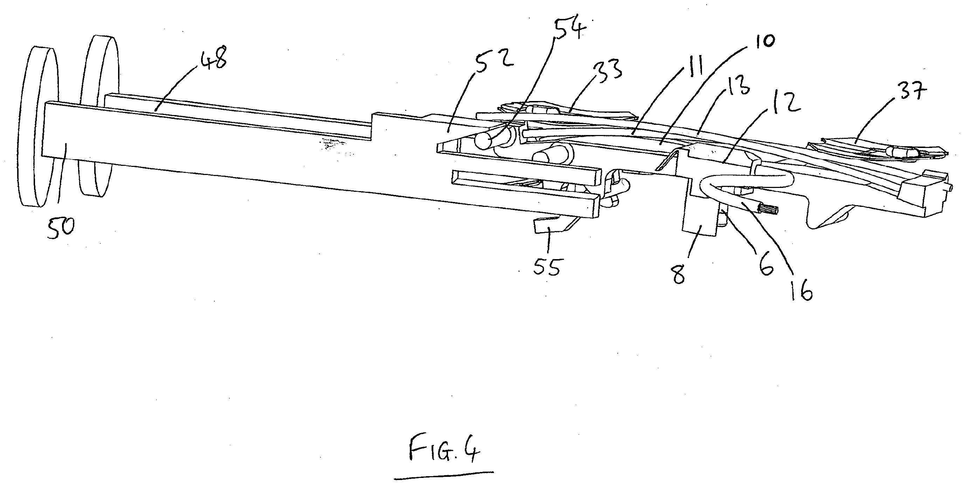

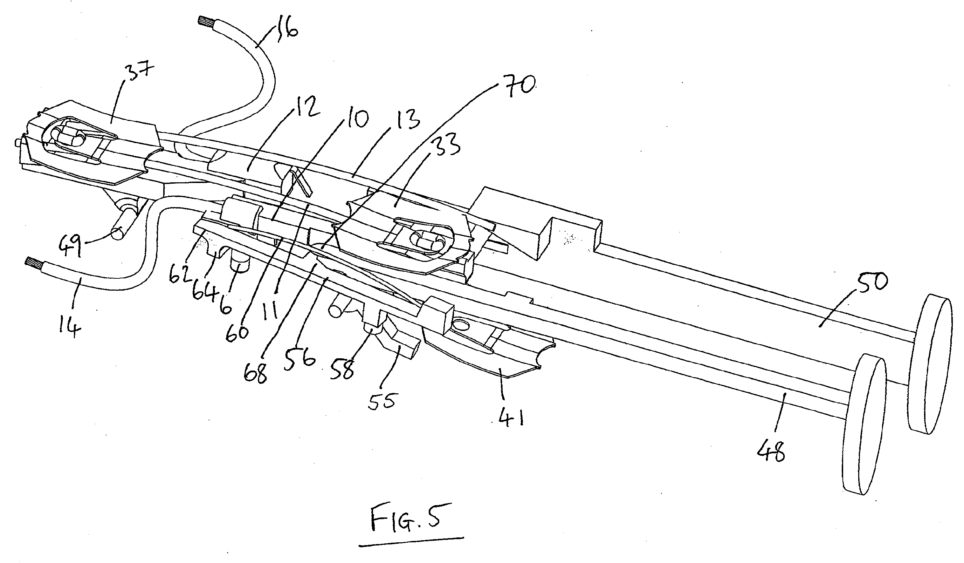

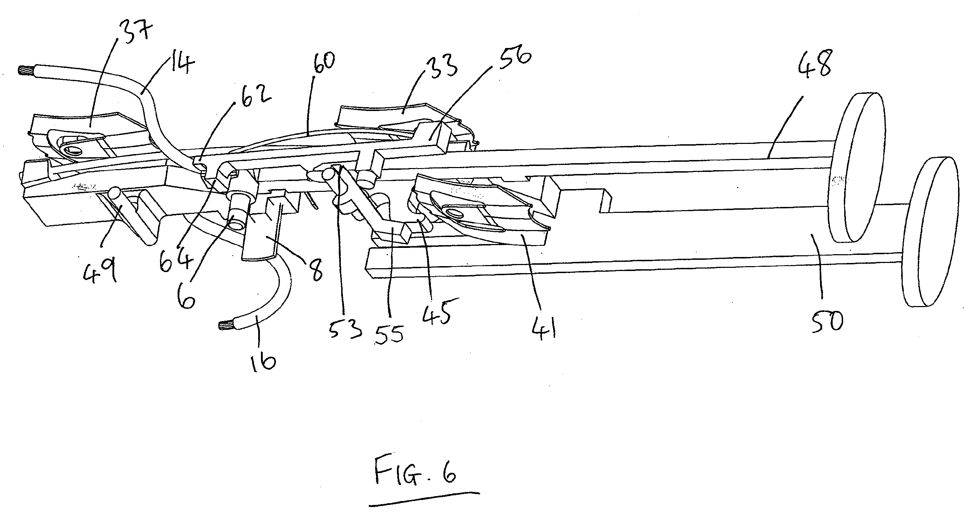

Figs. 4 to 9 show further views of the control 1 with some of the components removed for the purposes of clarity. In Figs. 5 and 6 it can be seen that the upper bimetallic actuators 33, 37 act on the ends of the live and neutral switch levers 10, 12 respectively, distal from the respective moveable contact members 6, 8, to raise the live and neutral contact members 6, 8 upwards against the bias force from the respective wire springs 11, 13. The lower bimetallic actuator 41 acts on a hook shaped tab 45 (see Fig. 6) on the underside of the live switch lever 10, again to raise the live contact member 6 upwards against the bias force from the wire spring 11.

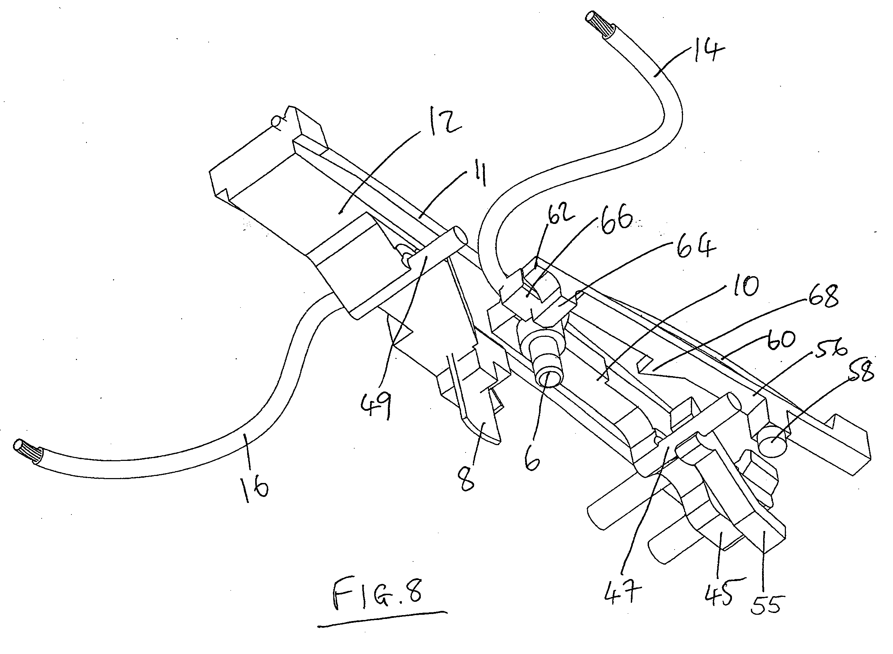

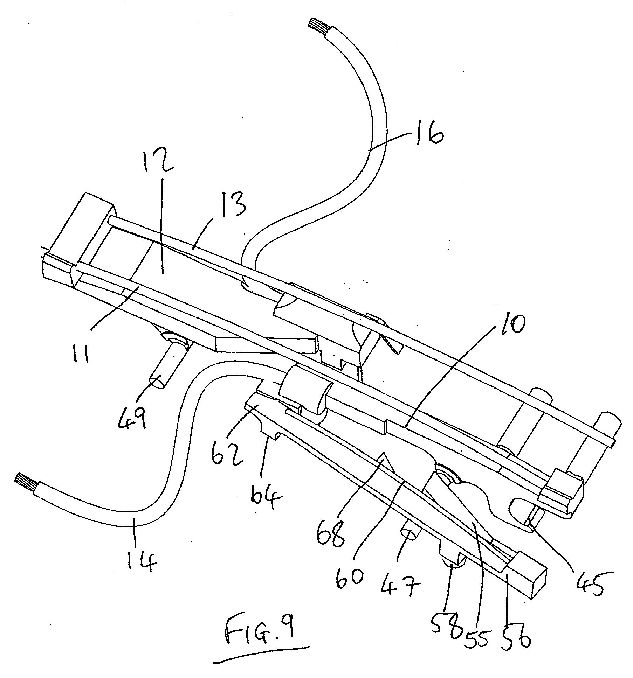

The vertical mount plate 18 also provides a structure on which a plastic chassis 46 is mounted (see e.g. Fig. 1), and provides pivot points for each of the switch levers 10, 12, i.e. into which pegs 47, 49 project respectively (see Figs 8 and 9). Screws 51 (seen in Figs. 1-3) passing through mounting lugs formed on the mount plate 18 are used to hold the control 1 onto the underside of a liquid heating apparatus (not shown).

The control 1 further comprises an "on" button 48 and an "off" button 50. As can be seen in Fig. 4, the "off" button 50 comprises a wedge-shaped cam surface 52 at its end proximal to the control 1 which engages with a peg 54 projecting from the switch lever 10 of the live contact 6. When the "off" button 50 is pushed in, i.e. towards the control 1, this acts to raise the live contact member 6 against the bias force of the wire spring 11.

As is seen in Fig. 5, the control 1 further comprises an additional plastic reset lever 56 next to the "on" button 48 and the live switch lever 10. The reset lever 56 pivots up and down as well as side to side about a protrusion 58 mounted in the chassis 46. The reset lever 56 is acted on by a wire spring 60, mounted in a projecting hook 61 (seen in Fig. 1), which biases its end 62 distal from its pivot point sideways towards the centre of the control 1 and the live switch lever 10, and downwards so that a tab 64 on its distal end 62 projects through the cylindrical earth connector 26 (seen in Fig. 3) such that it comes into contact with the base electrical connector part 4 when the apparatus is placed on the base. The projecting hook 61 (seen in Fig. 1), as well as housing the end of the wire spring 60, also acts to retain the distal end 62 of the reset lever 56 and therefore the protrusion 58 in its pivot point in the chassis 46. The position of the projecting hook 61 (seen in Fig. 1) is chosen so that it is not too close to the pivot point of the reset lever 56 at the protrusion 58 such that it would result in a short and stiff wire spring 60, but is close enough to retain the distal end 62 of the reset lever 56.

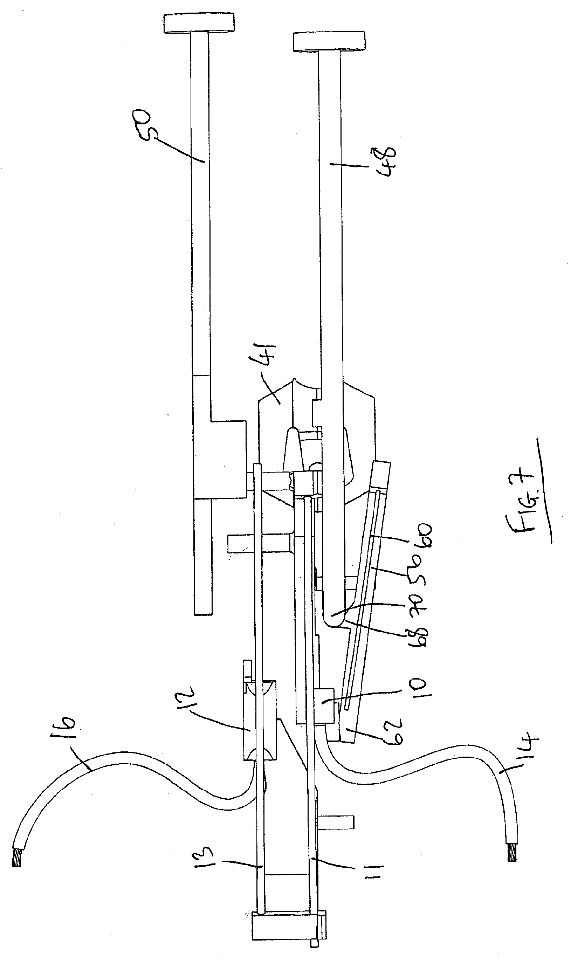

When the reset lever 56 is in its biased position, a sideways projection on the tab 64 at the distal end 62 fits underneath a lip 66 of the live switch lever 10 (see Figs. 5 and 8). Approximately half way along the reset lever 56 is a wedge shaped projection 68 (see Figs. 5 and 7). This is acted on by the distal end 70 of the "on" button 48 which, when depressed, moves the reset lever 56 sideways away from the live switch lever 10, i.e. clear of its lip 66.

Also provided on the live switch lever 10, rotatably attached to the beam 47 at its pivot point, is a steam override lever 55 which acts on the lower bimetallic actuator 41. The other end of the steam override lever 55 engages with a notch 53 on the arm of the "on" button which enables the steam bimetallic actuator 41 to be overridden or reset (see Fig. 6).

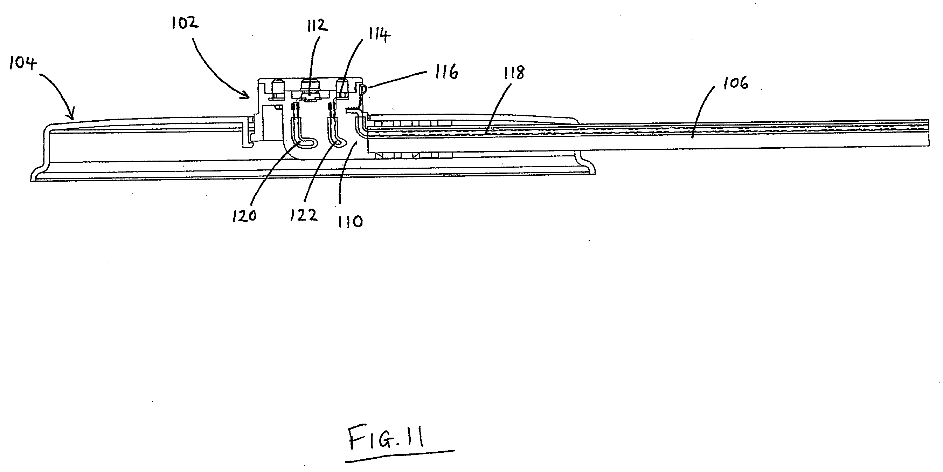

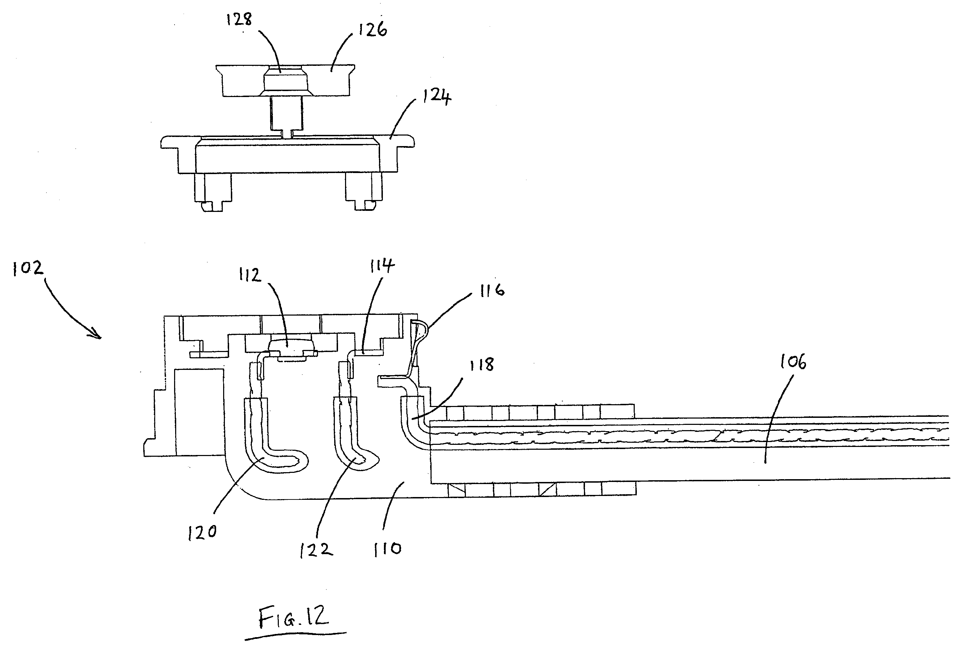

There is seen in Fig. 10 a power base unit 100 for a cordless electrical appliance such as is controlled by the system described above. The power base unit 100 comprises an upstanding base electrical connector part 102 fitted through a central recess in a base stand 104. The connector part 102 can be engaged with a corresponding connector part provide on the underside of an appliance at substantially any relative angular orientation, i.e. it is a so-called 360° connector part. A power supply cord 106 passes out from the underside of the base stand 104 and is provided with a mains plug 108 at its distal end. From the cross-sectional view of Figs. 11 and 12 it can be seen that the power supply cord 106 is terminated at its opposite end by a moulding 110 that is shared with the base connector part 102.

The components making up the base connector part 102 will be described with reference to Figs. 11 to 13. The main part of the base connector 102 is provided by the moulding 110 that is integrated with the power cord 106. Inside this moulding 110 there is housed a centrally arranged contact 112 for the live pin of the appliance connector part, a concentrically arranged contact 114 for the neutral ring, and projecting from the side of the moulding 110 there is an earth tab 116 which is sprung so as to be resiliently biased against the earth ring of the appliance connector part when the appliance is placed down on the base stand 104. The earth tab 116 comprises a leaf spring connected directly to the earth lead 118 of the power cord 106. Unlike a conventional three pole cordless connector, it can be seen that the live and neutral contacts 112, 114 are also connected directly to the corresponding leads 120, 122 of the power cord 106. No intervening leaf springs or blade-type e.g. "Faston" tab connectors are provided. The connection between each contact 112, 114, 116 and the corresponding lead 118, 120, 122 of the power cord 106 is protected inside the moulding 110 from the ingress of water or foreign bodies.

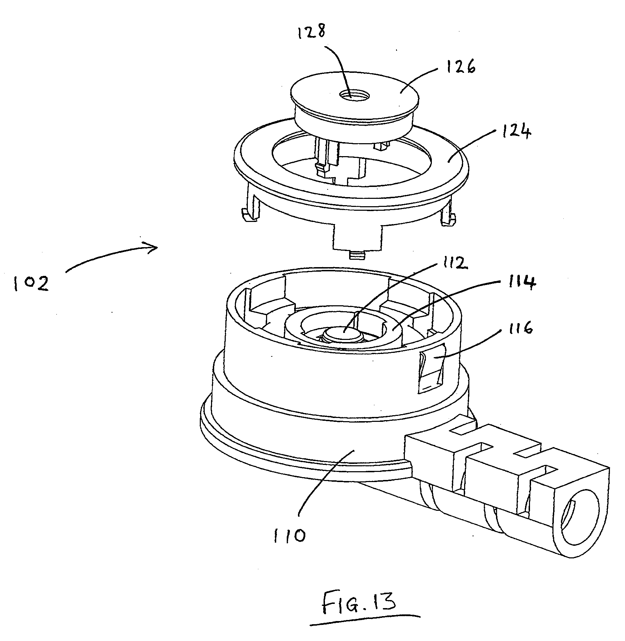

It can be seen from Figs. 12 and 13 that some components of the base connector part 102 are not part of the integral moulding 110. An outer cover ring 124 is snap fitted on top of th e moulding 110 to cover the neutral contact 114. An inner cover 126 is snap fitted inside the ring 124 to protect the live contact 112 and provide a central aperture 128 that only allows access by the live pin of the appliance connector part. While the covers 124, 126 are provided as separate parts in this example so as to simplify the moulding process, they could of course be integrally moulded in one form or another with the rest of the base connector 102.

Operation of this control will now be described with reference to Figures 1-13. In use the upper part 2 of the control 1 is mounted on the base of a liquid heating apparatus, e.g. a kettle, with the steam bimetal 41 arranged at the end of a steam tube and the two overheat bimetals 33, 37 in thermal communication with the heating element, e.g. an underfloor sheathed electric heating element. Typically the live-side overheat bimetal 33 will be arranged in thermal contact with or in close proximity to the sheathed heating element, and the neutral-side overheat bimetal 37 will be arranged to contact the diffuser plate between the cold tails of the sheathed heating element. This causes, in normal operation, the live contact to be opened first if the heating element overheats since the temperature rise will be greater at the surface of the element sheath than on the diffuser plate between the cold tails.

The electrical base connector part 4, 102 is mounted in a cordless connector base 104, one example of which is described above with reference to Figs. 10 to 13. In operation, the apparatus is placed on the cordless base 104 such that the upper part 2 of the control 1 is placed on top of the electrical base connector part 4, 102. Without either of the "on" or "off" switches 48, 50 being depressed, the live and neutral contact members 6, 8 are biased downwards by their respective wire springs 11, 13 via the respective switch levers 10, 12. Also, the distal end 62 of the reset lever 56 is biased downwards so that the tab 64 at this end protrudes through the central cylindrical section 26 of the control 1, and sideways towards the centre of the control 1 so that the sideways projection on the tab 64 at the distal end 62 of the reset lever 56 fits underneath the lip 66 of the live switch lever 10 (see Fig. 8).

Therefore, when the upper part 2 of the control 1 is placed on top of the electrical base connector part 4, 102, the tab 64 on the reset lever 56 comes into contact with the plastic moulding of the base connector part 4, 102, lifting upwards the distal end 62 and the live switch lever 10. The neutral contact member 8 comes into contact with the fixed neutral contact 114 in the base connector part 4, 102, but the circuit is not completed as the live contact member 6 has been lifted clear of the fixed live contact 112 in the base connector part 4, 102, and so the heating element in the apparatus is not energised. Also, the earth connector ring 26 comes into contact with the earth contact 116 in the base connector part 4, 102.

To energise the heating element in the apparatus the "on" button 48 is pushed in. The "on" button's distal end 70 pushes against the wedge shaped projection 68 on the reset lever 56 (see Figs. 5 and 7) moving its distal end 62 sideways away from the centre of the control 1 and clear from the lip 66 on the live switch lever 10. This frees the live switch lever 10 which is then moved downwards by the biasing force of the wire spring 11 so that the moveable live contact member 6 makes contact with the fixed live contact 112 in the base connector part 4, 102. This completes the electrical circuit and thus energises the heating element. Although not shown, the "on" and "off" buttons could be interlocked, e.g. via a linkage mechanism such as a pivoting lever. This would cause one to be pushed out when the other is pressed in.

Once the heating element has been energised, liquid in the apparatus is heated to boiling, though if for any reason heating is to be stopped, the off button 50 can be depressed. Depressing the "off" button causes the spigot 54 on the live switch lever to be moved downwards by means of the wedge 52 on the "off" button 50. This lifts the moveable neutral contact member 8 away from the fixed neutral contact 114, and breaks the electrical circuit thus de-energising the heating element. Otherwise, heating proceeds to boiling, which produces steam in the apparatus. The increasing pressure of the increasing volume of steam forces the steam into the steam tube and down to impinge on the steam bimetal 41. The snap acting temperature of the bimetal 41 does not need to be arranged at 100°C, i.e. boiling, but can be lower, e.g. 75°C, as it is merely the presence of steam which indicates boiling in the apparatus. This enables reliable boil detection. When the steam bimetal 41 snaps, because the base 43 of the bimetal 41 is touching the vertical mount plate 18, all the movement of the bimetal 41 occurs in the hoop section 44. The steam bimetal 41 pushes down on the hook shaped tab 45 on the live switch lever 10, thus pivoting the live switch lever 10 which lifts the moveable live contact member 6 clear of the fixed live contact 112 in the base connector part 4, 102. This breaks the circuit and de-energises the heating element. If the liquid is desired to be boiled shortly after the heating element has been de-energised, the "on" button 48 can be depressed which rotates the steam override lever 55 via the notch 53 on the arm of the "on" button 48. The steam override lever 55 pushes the steam bimetallic actuator 41 away from the hook shaped tab 45 on the live switch lever 10 and thus allows the live contact 6 to remake, energising the heating element again.

In the event of overheating of the heating element, e.g. if the apparatus is turned on without any water in the vessel, the overheat bimetallic actuator 33, snaps to act on the live switch lever 10, thus moving the moveable live contact member 6 away from the fixed live contact 112 in the connector base part 4, 102. The live bimetal 33 will snap first as this is in closer thermal contact with the sheathed heating element as opposed to the neutral bimetal 37 which is positioned between the cold tails of the sheathed heating element. If, for some reason the live overheat bimetal 33 does not snap, the neutral bimetal 37 will subsequently snap, lifting the neutral contact lever 12 and thus the moveable neutral contact 8 away from the fixed neutral contact 114 in the connector base part 4, 102 and de-energising the heating element.

As for the steam bimetal 41, when the live and neutral overheat bimetals 33, 37 snap, because their bases 35, 39 are touching the vertical mount plate 18, all the movement of the bimetals 33, 37 occurs in the respective hoop section 36, 40. Again, the heating element is de-energised, which in this situation prevents any damage to the heating element and/or the apparatus. With the live switch lever 10 having been lifted up by the overheat bimetal 33, the reset lever 56, which is biased towards the centre of the control 1 by its wire spring 60, moves underneath the live switch lever 10, preventing the moveable live contact 6 from remaking the circuit. Although the "on" button 48 can be used to release the live switch lever 10, the lever will not move back down to remake the circuit until the live overheat bimetal 33 cools and resets. This is different to the operation of the steam bimetallic actuator 41 which can be reset using the steam override lever 55. For safety reasons no override mechanism is provided for the overheat bimetallic actuators 33, 37.

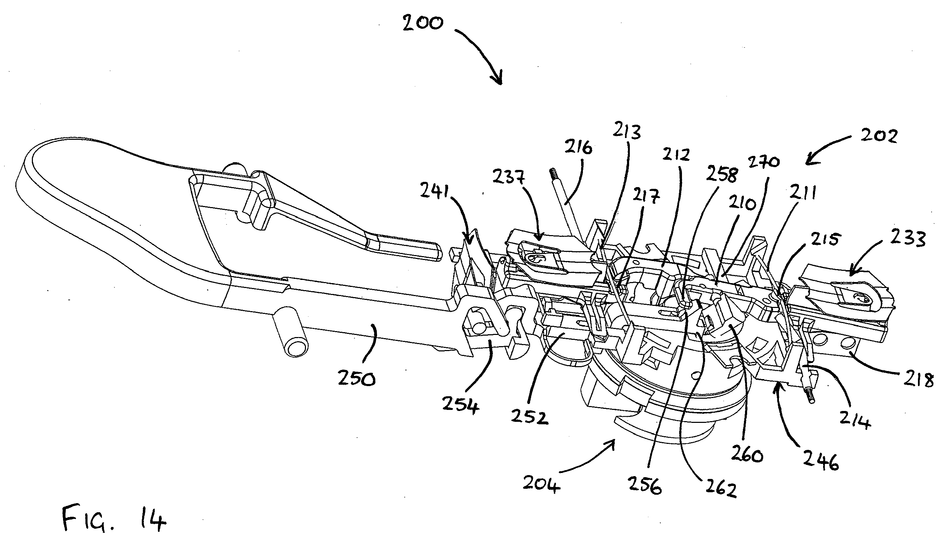

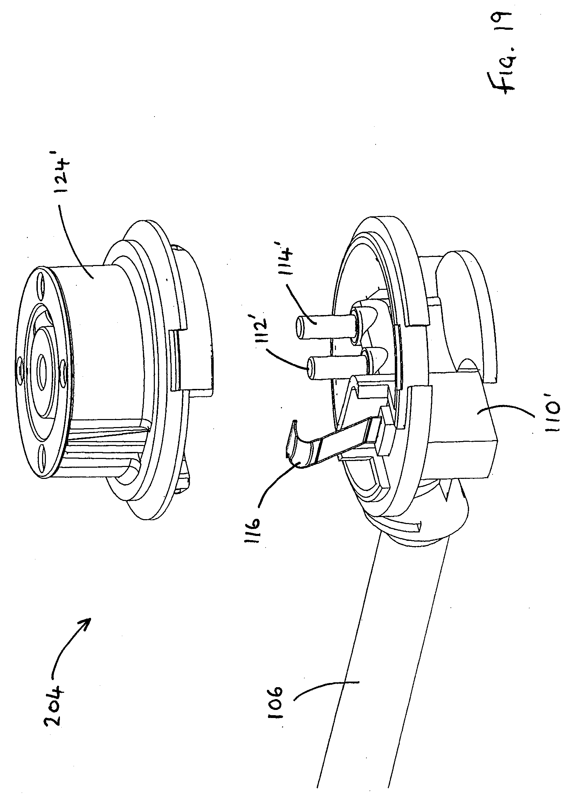

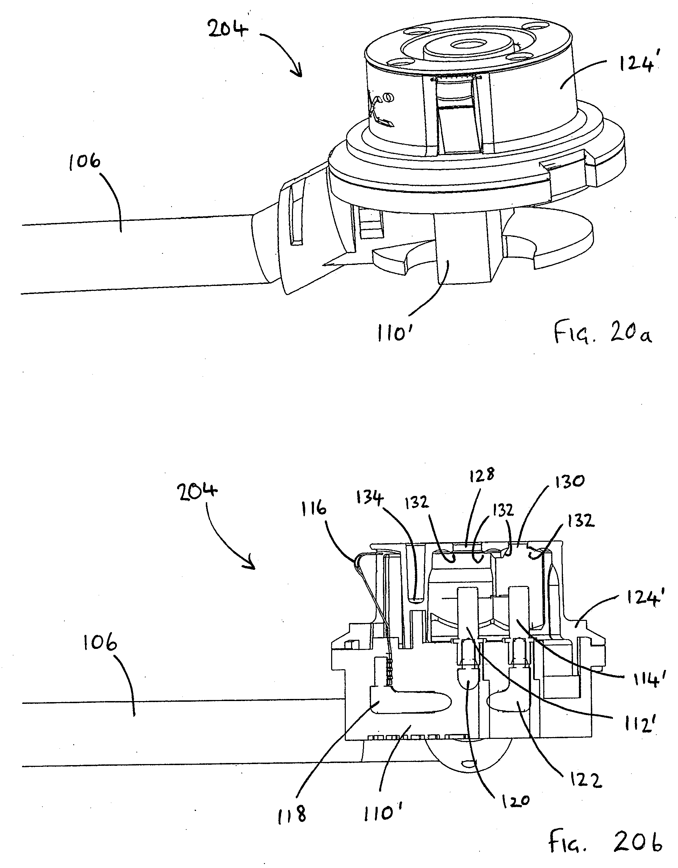

There is seen in Fig. 14 onwards an embodiment of a control 200 and cordless base electrical connector part 204. The control 200 has the same basic construction as that previously described, namely, comprising an upper part 202 including an integral cordless electrical connector (male) part that mates with a base cordless electrical connector (female) part 204. The connector part 204 may be housed or otherwise provided by a cordless power base e.g. unit 100 seen in Fig. 10. Further details of the base connector part 204, which contains fixed live, neutral and earth contacts 112', 114', 116, are described below with reference to Figs. 19 and 20. The two connector parts 202, 204 can be engaged at substantially any relative angular orientation, i.e. the control 200 provides a so-called 360° connector.

There is seen in Fig. 14 an on/off switch 250 for manual operation of the control 200. It will be understood that when the control 200 is installed in the base of a liquid heating apparatus such as a kettle, the on/off switch 250 may extend through an opening in the outer shell of the apparatus so as to be exposed to a user. In the illustrated embodiment the on/off switch 250 is pushed down to turn on the control 200 and pulled up to turn off the control 200. Of course, any suitable kind of button or knob may be used to provide a user interface for the control 200.

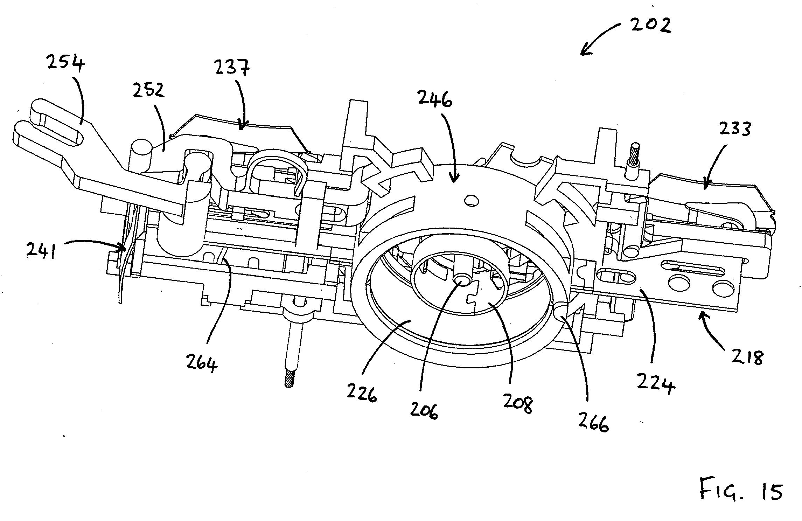

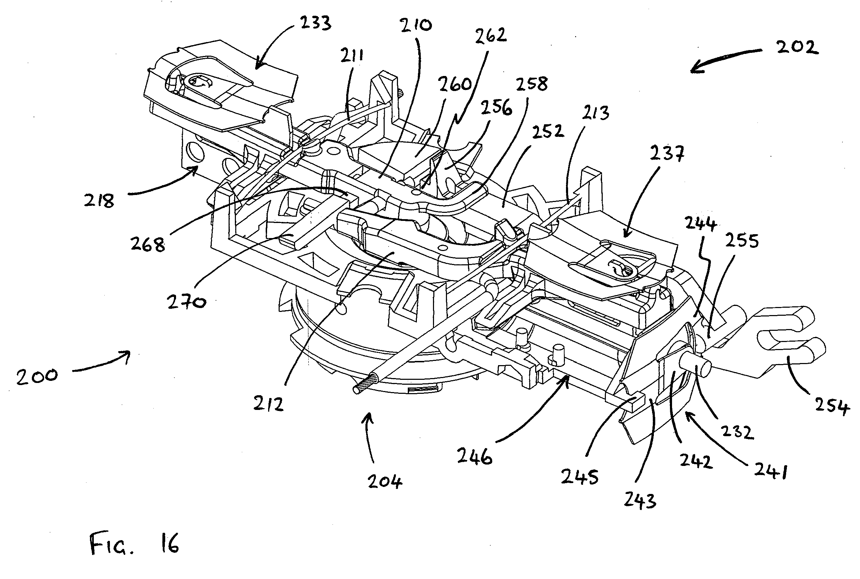

In Figs. 15 and 16 the on/off switch 250 has been removed to show the upper part 202 of the control 200 in closer detail. It can be seen that the upper part 202 of the control 200 includes a moveable live contact member 206 and a moveable neutral contact member 208. As before, the live contact member 206 is a cylindrical metal pin having an end-point contact surface at its lower end. The contact surface of the live contact pin 206 is coated with silver so that it can safely make and break electrical contact with the silver contact surface of the corresponding live contact 112' in the base electrical connector part 204. In this embodiment the neutral contact member 208 is a cylindrical metal member. The ring-shaped neutral contact member 208 is dimensioned so as to pass through a corresponding annular channel in the base electrical connector part 204 and make contact with the fixed neutral contact 114' therein. As will be described later, this ring-like neutral contact member 208 provides a 360° degree contact surface for a point contact e.g. pin 114', rather than a ring, in the base connector part 204.

Each of the contact members 206, 208 is carried by a respective moveable switch lever 210, 212. The two switch levers 210, 212 are each pivotally mounted on the main chassis moulding 246 of the control 200. Furthermore, the lever 210 carrying the live contact member 206 and the lever 212 carrying the neutral contact member 208 are each moveable independently of the other in normal use. Also pivotally mounted on the control chassis 246 is an on/off slider 252 arranged to interact with the live contact lever 210. Movement of the on/off slider 252 is actuated by a rocking pivot member 254 which is itself moved by the on/off switch 250.

From the view in Fig. 15 it can be seen that the upper part of the control 202 comprises a datum point 266 on the underside of the chassis moulding 246, on the rim around the earth ring 226, which is arranged in use to bear on a portion of a base connector part 204 (seen. in Figs. 19 and 20) when the two are mated. The datum point 266 acts to set an accurate mating separation between the two parts 202, 204 of the control 200. The chassis moulding 246 can be made from high grade engineering plastics and thus a tight tolerance for the datum point 266 can be achieved. The datum point 266 therefore acts to fix the distance that the moveable contact members 206, 208 need to move in order to come into contact with he corresponding contacts 112', 114' in the base connector part 204 (seen in Figs. 19 and 20). The datum point 266 helps to ensure that movement of the live and neutral contact members 206, 208 always achieves a given contact pressure with the static contacts 112', 114' in the base connector part 204. In other words, the resiliently-biased switch levers 210, 212 can be relied upon to provide a desired contact pressure because the datum point 266 fixes the range of movement.

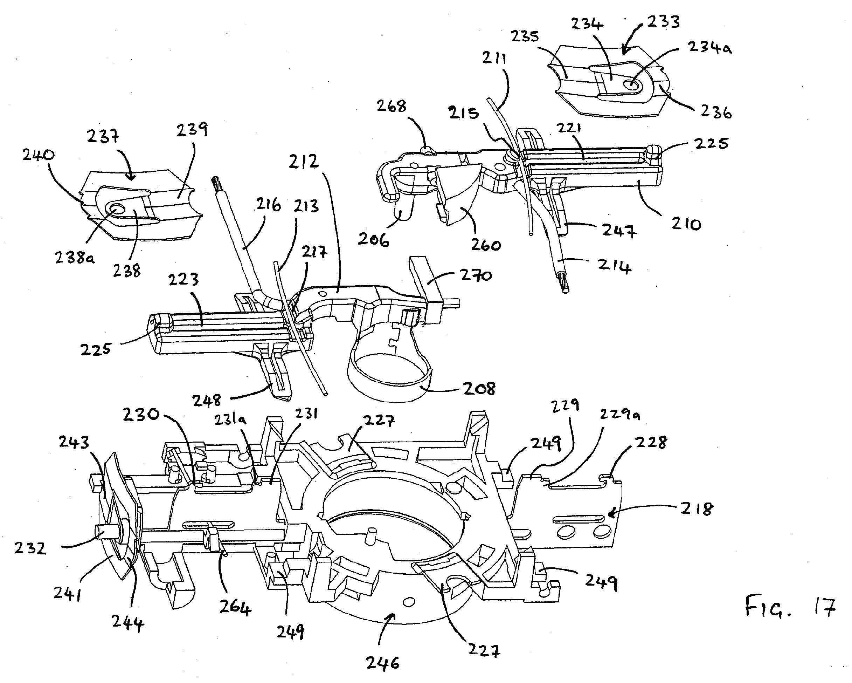

As can be better seen from the exploded view in Fig. 17, the live contact lever 210 is an integrated plastic moulding that encapsulates an insulated wire 214 used to connect power to the live side of an electric heating element in the liquid heating apparatus. The terminal end of the live wire 214 is connected to the live contact member e.g. pin 206 projecting downwardly from the forward end of the lever 210. Similarly, the moveable neutral contact lever 212 is an integrated plastic moulding encapsulating an insulated wire 216 that is connected to the neutral contact member 208 and used to connect the other side of the electric heating element, thereby completing the power supply circuit. The live contact lever 210 is provided on its upper side with a groove or tab 215 to retain a wire spring 211 (as also seen in Figs. 14 and 16) disposed laterally of the lever 210. Similarly, the neutral contact lever 212 is provided with a groove or tab 217 to retain its wire spring 213 (seen also in Figs. 14 and 16). It is also seen from Figs. 14 and 16 that the respective wire springs 211,213 are retained between the features 215, 217 on the respective levers 210, 212 and upstanding detents on the control chassis moulding 246 so as to extend laterally of the levers 210, 212. The wire springs 211, 213 are advantageously retained in a biased state so as to ensure that a return force is generated as soon as either of the levers 210, 212 undergoes pivoting movement. The wire springs 211, 213 bias the respective live and neutral levers 210, 212 and thus the moveable contact members 206, 208 downwards, i.e. towards the corresponding fixed contacts 112', 114' in the base electrical connector part 204.

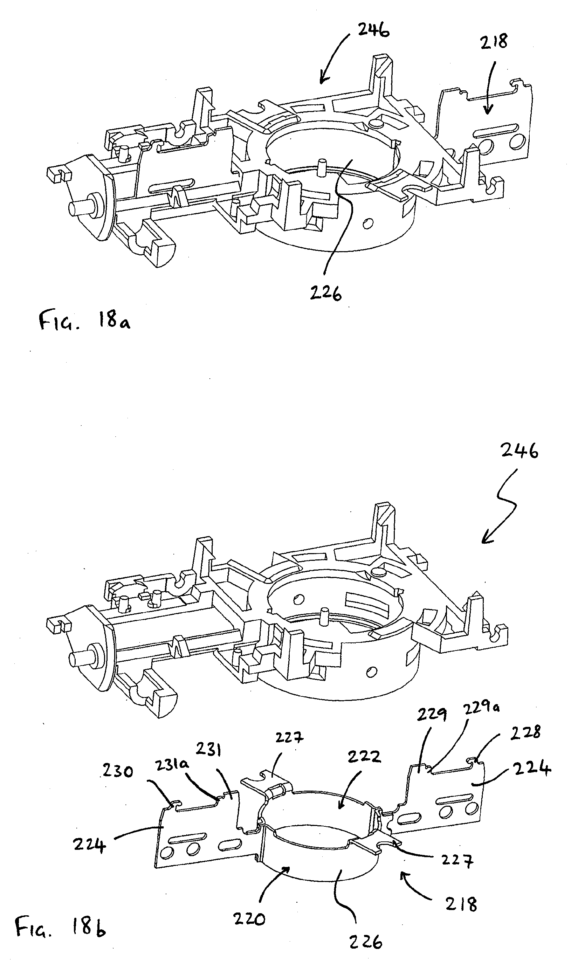

As is best seen from Fig. 18, the main chassis moulding 246 of the control 200 encapsulates a vertical mount plate 218 having the same basic construction as that previously described. The vertical mount plate 218 comprises two half sections 220, 222 fixed together to form a vertical spine 224 extending either side of a central metal cylinder which forms a ring-shaped earth contact member 226. The outer surface of the earth contact ring 226 is encapsulated in the plastic of the chassis moulding 246. The inner surface of the earth contact ring 226 (see Fig. 18a) is exposed so that it can make contact with the earth spring 116 (seen in Figs. 19 and 20) on the outside of the base connector part 204 when the two parts 202, 204 are engaged. The earth spring 116 is designed to be wider than any potential gap (e.g. due to manufacturing tolerances) between the two halves 220, 222 forming the earth ring 226, where the plastic of the chassis moulding 246 could potentially fill the gap and result in an insulated strip.

Similar to the first example described above, the upper surface of the spine 224 of the vertical mount plate 218 provides locations for the overheat actuators 233, 237 (seen in Figs. 15 and 16) to be mounted horizontally on top of the control 200. However, instead of providing tabs to mount the bimetallic actuators, in this embodiment there are hooks 228, 230 onto which the two thermally sensitive snap acting bimetallic actuators 233, 237 are each attached by means of an eye 234a, 238a at the end of the actuator tongue 234, 238 (seen clearly in Fig. 17). Each actuator 233, 237 being mounted by means of a hook-and-eye arrangement allows for ease of assembly and removes the need for rivets or the like. The hooks and eyes are dimensioned so that when the actuator 233, 237 is in its normal position it is prevented from moving relative to the mount plate 218 to the extent that would be necessary for the hook 228, 230 to become disengaged from the eye 234a, 238a. The actuators 233, 237 can be fitted by passing the hook 228, 230 through the eye 234a, 238a and then rotating the actuator 233, 237 relative to the mount plate 218 so that the base edge 235, 239 of the actuator clips against a step 229a, 231 a provided below a rating stop 229, 231.

In Figs. 14-17 the bimetallic actuators 233, 237 are shown in their low temperature configurations. Inwardly of the bimetal mounting hooks 228, 230, the vertical mount plate 218 also provides two horizontally extending tabs 227 (see Figs. 17 or 18) each provided with a part-hole to locate screw that fasten the control 200 to the underside of a heater plate (not shown) in the base of a liquid heating apparatus so that the two upper bimetallic actuators 233, 237 are held in thermal contact with the heater plate. While the heater plate may flex from its horizontal plane as it heats and cools in use, the vertical mount plate 218 is not particularly susceptible to movement in this direction. Accordingly the vertical position of the bimetallic actuators 233, 237 relative to the heater plate remains fixed by the fastening connection.

As will be understood with reference to Fig. 17, the hooks 228, 230 and steps 229a, 231 a of the rating stops 229, 231 ensure accurate vertical and horizontal positioning of the bimetallic actuators 233, 237. With only the hooks 228, 230 to fix each actuator tongue 234, 238 in position, the base 235, 239 at one end of the actuator 233, 237 and the hoop 236, 240 at the other end of the actuator 233, 237 would both be free to move vertically upon operation of the actuator 233, 237 and reversal of its curvature. However, because the vertical mount plate 218 also provides a step 229a, 231 a holding each actuator 233, 237 against a rating stop 229, 231, the distance of travel of its base 235, 239 is limited. This results in an increased distance of travel, upon operation of the actuator 233, 237, for the hoop 236, 240 at the opposite end. The location of the actuators 233, 237 on the steps 229a, 231 a thereby ensures an amplification of movement of the hoop 236, 240 at the other end. It is the hoop 236, 240 of each actuator 233, 237 that bears on an upstanding protrusion 225 at the back of each switch lever 210, 212 to pivot the levers 210, 212.

The rating stops 229, 231 are designed to be slightly 'proud' of the nominal position achieved when the control 200 is fully engaged with a heater in order to prevent excessive force being applied to the actuators 233, 237 located on the steps 229a, 231 a. Such an arrangement enables the actuators 233, 237 to held in precise alignment with the heater surface without any risk of imposing stresses which could affect their thermal switching or snap action point. If the actuators 233, 237 were to be pressed against the heater surface and overly stressed then their operating temperature would be affected. The rating stops 229, 231 prevent this from happening.

In this embodiment a third thermally sensitive snap acting bimetallic actuator 241 is mounted vertically at one end of the control chassis 246, as is seen most clearly in Fig. 16. As before, this bimetallic actuator 241 is arranged to be in fluid communication with a steam tube provided in the liquid heating apparatus so as to act as a boiling sensor. A peg 232 is moulded onto the end of the chassis 246 for connection of the bimetallic actuator 241. The bimetallic actuator 241 is mounted by the peg 232 passing through a hole in its tongue 242. A stop 245 is provided by the chassis moulding 246 to limit the distance of travel of the base 243 of the actuator 241. The hoop 244 of the steam sensing actuator 241 therefore has its snap action movement amplified. The hoop 244 of the actuator 241 engages a projection 255 on the side of the on/off slider 252 so that operation of the actuator 241 can pull the on/off slider 252 back into an off position, as will be described below.

In the exploded view of Fig. 17 the live and neutral switch levers 210, 212 have been taken out from beneath the bimetallic actuators 233, 237 so as to be seen in more detail. The on/off slider 252 is not shown. Each lever 210, 212 is pivotally mounted by an integral pivot beam 247, 248 extending transverse to the axis of the lever 210, 212. In this embodiment each lever 210, 212 is provided with a longitudinal slot 221, 223 in the back half of the lever body that enables the two levers 210, 212 to engage centrally over the vertically upstanding parts of the mount plate 218. The lever pivot beams 247, 248 rest on mounting surfaces 249 provided on the main chassis 246 so that the forward end of each lever 210, 212 carrying the live and neutral contact members 206, 208 can rock up and down relative to the chassis 246. At the back end of each lever 210, 212 there is provided an upstanding protrusion 225 that touches, or is closely spaced from, the underside of the hoop 236, 240 of its associated bimetallic actuator 233, 237 when the lever 210, 212 is pivotally mounted over the vertical mount plate 218 and the actuators 233, 237 are mounted thereabove.

Returning to the control assembly shown in Figs. 14-16, it can be seen how the horizontal bimetallic actuators 233, 237 are mounted over the protrusions 225 provided at the back end of the live and neutral switch levers 210, 212, respectively, distal from the moveable contact members 206, 208. When one of the bimetallic actuators 233, 237 reaches its operating temperature, the outer hoop 236, 240 of the actuator 233, 237 moves downward in a snap action to press on the protrusion 225 at the back end of the respective lever 210, 212 so that the lever 210, 212 pivots against the bias force of its wire spring 211, 213. The front end of the lever 210, 212 is thereby lifted up so that the respective live or neutral contact member 206, 208 is moved upwards to break electrical contact with the corresponding pins 112', 114' in the base connector part 204.

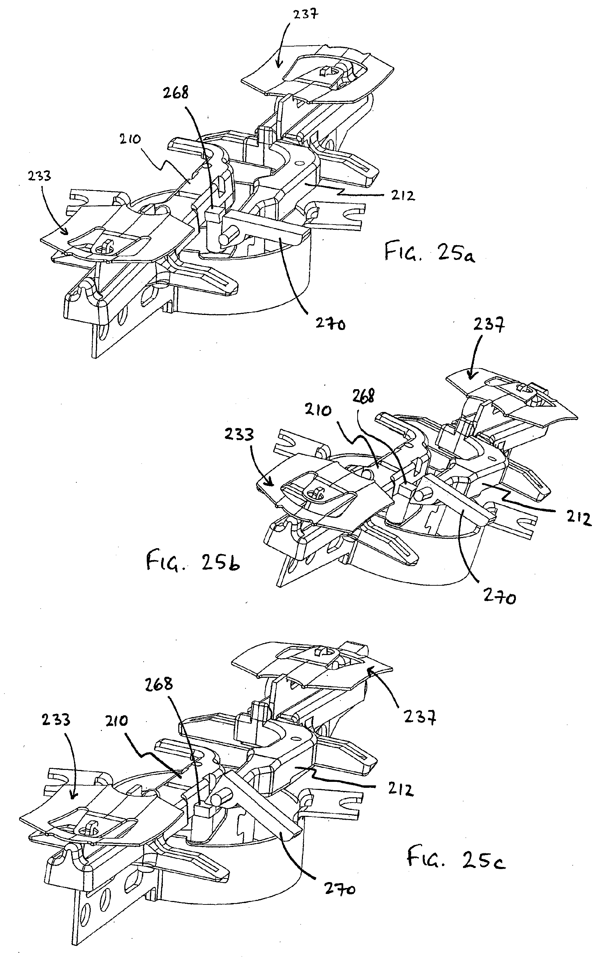

Although the live and neutral switch levers 210, 212 do move independently of one another in normal use, they are arranged in the control 200 so as to ensure that the live contact pin 206 always makes or breaks the electrical circuit before the neutral contact ring 208 is moved in or out of electrical contact. This is achieved by having the live contact pin 206 at a higher position relative to the control chassis 246, and hence relative to any apparatus and its heater to which the control 200 is mounted, as compared to the neutral contact ring 208. There is also a relationship between the two switch levers 210, 212 by virtue of a latching mechanism seen in detail in Fig. 25 and discussed below.

As can be seen in Fig. 16, the live switch lever 210 is provided with a latch keeper 268 on its side adjacent to the neutral switch lever 212, while a latch member 270 is pivotally connected to the neutral switch lever 212. If, in an abnormal situation, the neutral lever 212 is moved before the live lever 210 then the latch member 270 pivots down and engages the keeper 268 so that the neutral lever 212 is locked out of further movement. However, if the live lever 210 is moved first then the keeper 268 is raised out of the way and the neutral lever 212 is then free to move up and down without engagement of the latch member 270. This will be described in more detail below.

It can also be seen, especially from Figs. 14 and 16, that the on/off slider 252 interacts with the live contact lever 210. At its front end, the on/off slider 252 comprises a wedged shape cam surface 256 which engages with a follower 258 projecting laterally from the live switch lever 210. Forwards and backwards movement of the on/off slider 252 can therefore result in downwards and upwards movement of the front end of the live lever 210 and thus of the live contact pin 206. Movement of the follower 258 along the cam surface 256 provided by the on/off slider 252 is resisted by the bias force of the wire spring 211 engaged across the top of the live lever 210. As is mentioned above, the steam sensing bimetallic actuator 241 can act on the projection 255 on the side of the on/off slider 252 to pull the slider 252 backwards and push the follower 258 along the cam surface 256 so that the front end of the live lever 210 carrying the contact pin 206 is lifted up. The snap action force of the bimetallic actuator 241 is great enough to overcome the spring bias of the wire spring 211 acting on the live lever 210.

The wire spring 211 tends to bias the live lever 210 with its contact pin 206 into a downwards position, i.e. into contact with the corresponding contact 112' in the base connector part 204. However, downwards movement of the live pin 206 can be blocked by a blocking member 260 that is seen to be pivotably mounted towards the front end of the live lever 210. The blocking member 260 is sized and shaped so as to interact with one or more upper surfaces of the base connector part 204 when the upper part of the control 202 is placed thereon. The blocking member 260 can be swung out of a blocking position by a push member 262 provided at the distal end of the on/off slider 252. Forwards movement of the on/off slider 252, for example when the on/off switch 250 is flicked down, can press the push member 262 against the blocking member 260. However, forwards movement of the on/off slider 252 is limited by another wire spring 264 (seen in Fig. 15) so that the slider 252 is biased back to a central position after it is released.

Figs. 19 and 20a-20b show details of another base connector part 204 that could be used with the base stand 104 seen in Fig. 10 and a control 200 as described with respect to Figs. 14-18. As before, the power cord 106 contains an earth lead 118, live lead 120 and neutral lead 122 with the terminal end of each lead 118, 120, 122 connected directly to the respective earth contact spring 116, live contact pin 112', and neutral contact pin 114' in the base connector part 204. In this embodiment the base connector part 204 is designed for use with a control 200 that has a moveable neutral ring 208 and thus the neutral contact 114' in the base can take the form of a pin. From the cross-sectional view of Fig. 20b it is clearly seen that an integral moulding 110' again encapsulates the end of the power cord 106 and the connection between its leads 118, 120, 122 and the contacts 116, 112', 114'. However, in this embodiment the integral moulding 110' is a sub-assembly that does not house the contacts. Instead, the moulding 110' is covered by a separate housing 124' for the contact pins 112', 114'. The housing 124' may snap fit onto the sub-assembly comprising the moulding 110' and power cord 106.

It will be appreciated that the amount of material used for the integral moulding 110' may be minimised as it does not act to house the contacts 112', 114', 116 but only to protect the point of permanent attachment to the power cord 106. The housing 124' can be moulded as a separate piece. The integral moulding 110' is formed around the proximal end of the power cable 106 after the adjacent ends of the contact pins 112', 114' and earth spring 116 have been permanently attached to the ends of respective leads 120, 122, 118, for example by a mechanical deformation operation such as crimping. In some connectors only the live contact 112' may have a silvered surface, if this is the only contact intended to make or break electrical connection. However the neutral contact 114' may also have a silver coating.

Referring back to Fig. 20b, various features are moulded into the housing 124' so as to ensure that the electrical connector part 204 is not hazardous even if it comes into contact with water. The housing 124' is provided with two openings in its upper surface, a central aperture 128 through which a live terminal e.g. pin can pass to contact the end-point surface of the live contact pin 112' and a concentric ring aperture 130 through which a neutral terminal e.g. ring can pass to contact the end-point surface of the neutral contact pin 114'. The side surface of the housing 124' is also provided with an opening for the earth contact 116, which comprises a leaf spring as previously described.

As can be seen from Fig. 20b, both the aperture 128 for the live pin 112' and the aperture 130 for the neutral pin 114' are provided with a downwardly depending lip 132. For the central aperture 128 the lip 132 circumscribes the entire opening, so that any liquid that runs into the opening 128 will tend to form a drop rather than maintaining a wet bridge that spans down to the live pin 112'. Once the housing 124' is fitted over the earth tab 116, its orientation is fixed so that only a portion of the ring-shaped opening 130 is above the neutral pin 114'. At least this portion of the opening 130 (seen on the right hand side in Fig. 20b) is provided with a downwardly depending lip 132. The opening 130 above the neutral pin 114' extends circumferentially to a liquid collection surface 134 that is spaced away from the contacts 112', 114'. It can also be seen that radially outward of each opening 128, 130 the downwardly depending lip 132 is part of a continuous surface that can guide liquid radially away from the contact pins 112', 114'. Even though the connector part 204 may have a relatively low profile, e.g. with only a 3 mm separation between the contact surfaces and the exterior of the housing 124', these features all contribute towards ensuring that the electrical pins 112', 114' are separated from the upper surface of the housing 124' by a dry zone that prevents electrical tracking, e.g. so that a human finger touching the housing 124' does not receive an electric shock even if the connector part 204 is wet..

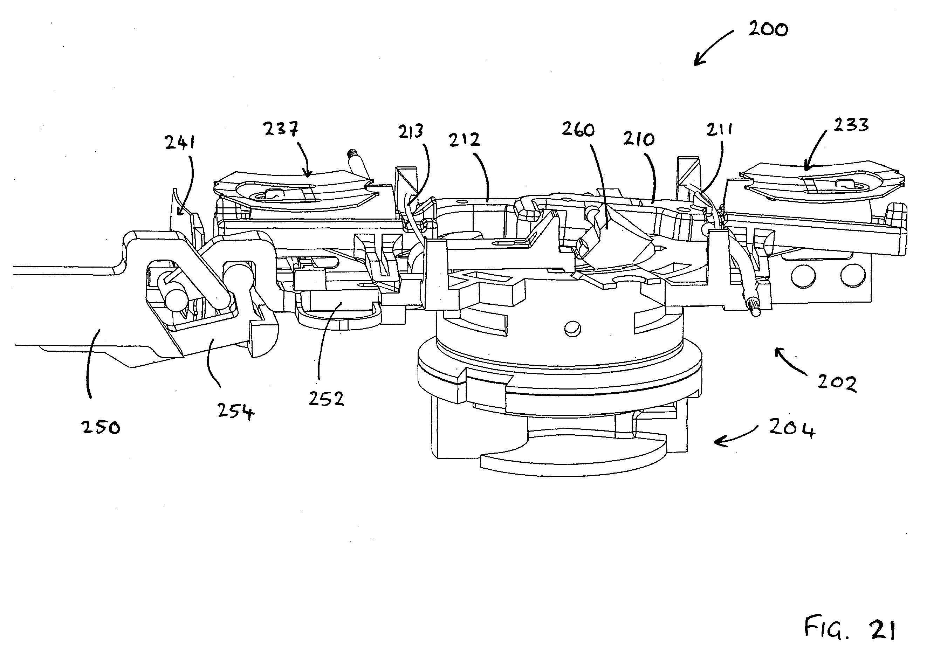

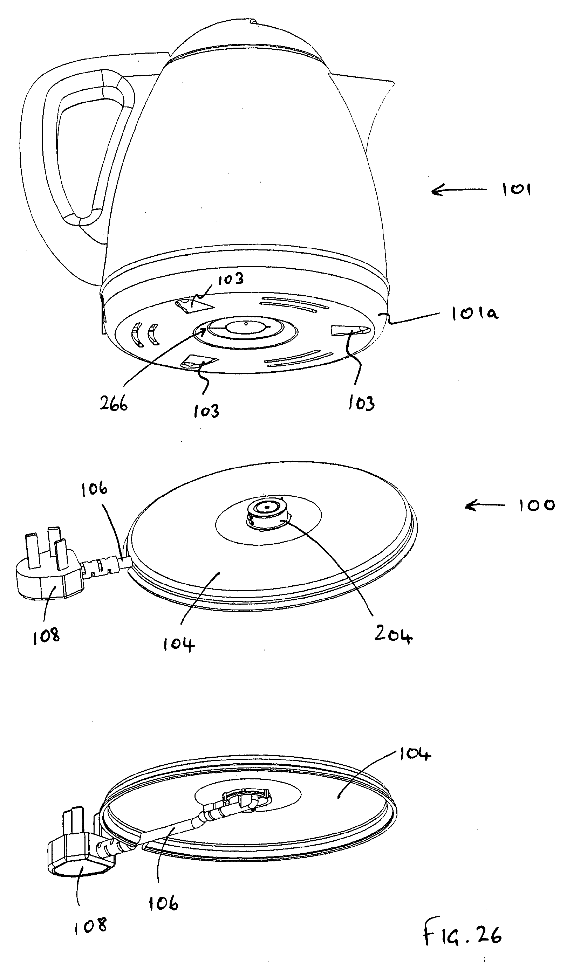

Operation of the control 200 will now be described with reference to Figs. 21-25. It is assumed that the control 200 is mounted in the base of a liquid heating apparatus, e.g. an electric kettle, as shown in Fig. 26. The two horizontally arranged bimetallic actuators 233, 237 provide two levels of protection to sense an overheat condition, such as may occur when a heater boils dry or the kettle is turned on without any water in it. The bimetallic actuator 233 acting on the live lever 210 is arranged to provide a primary response to overheating and may be mounted in contact with or close to the sheathed heating element of a typical underfloor heater. The bimetallic actuator 237 acting on the neutral lever 212 may be arranged to provide secondary protection. So as ensure that electrical contact is broken via the live contact pin 206 rather than via the neutral contact ring 208, the secondary bimetal 237 is arranged to operate after the primary bimetal 233, for example by mounting the secondary bimetal 237 in a cooler region of the heater, such as between the cold tails of a sheathed heating element in an underfloor heater. The secondary bimetal 237 may also be designed to operate at a higher temperature. It is also ensured that the secondary bimetal 237 resets before the primary bimetal 233 by providing the neutral switch lever 212 with a stronger wire spring 213 than the wire spring 211 acting on the live switch lever 210. The neutral contacts are therefore re-made before the live contacts.

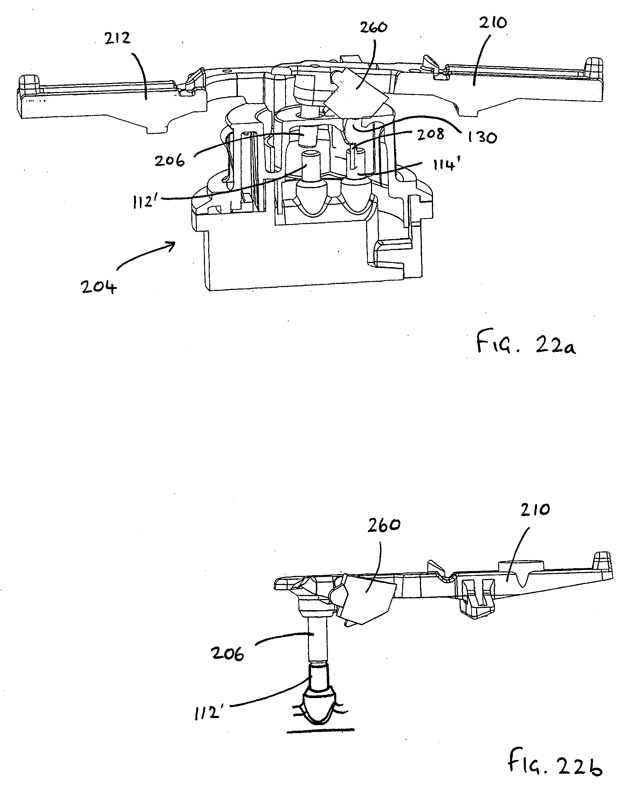

Fig. 21 shows the configuration of the control 200 when a cordless liquid heating apparatus is placed on its power base unit but before the control has been manually switched on. As is more clearly seen from the cross-section of Fig. 22a, the live contact lever 210 is blocked from moving downwardly under the biasing force of the spring wire 211 as the blocking member 260 has swung down under its own weight to a stable blocking position in which it engages an upper wall or edge of the base connector part 204, for example an upper edge of an annular aperture 130 that receives the neutral contact ring 208. Movement of the live switch lever 210 is blocked so that the live contact pin 206 is not brought into contact with the corresponding pin 112' in the base connector part 204. However, the neutral contact lever 212 is not blocked and thus is biased downwards by its wire spring 213 so that the neutral contact ring 208 is in contact with a corresponding neutral contact pin 114' in the base cordless connector part 204. It will be understood that the interaction between the blocking member 260 and the base connector part 204 ensures that the control 200 can never be switched on when the liquid heating apparatus is first placed down on its power base, without manual intervention being required. This prevents the heater (or other electrical component connected to the control 200) in the apparatus being inadvertently re-energised when it is placed on the base after being lifted off, e.g. to pour out heated liquid.

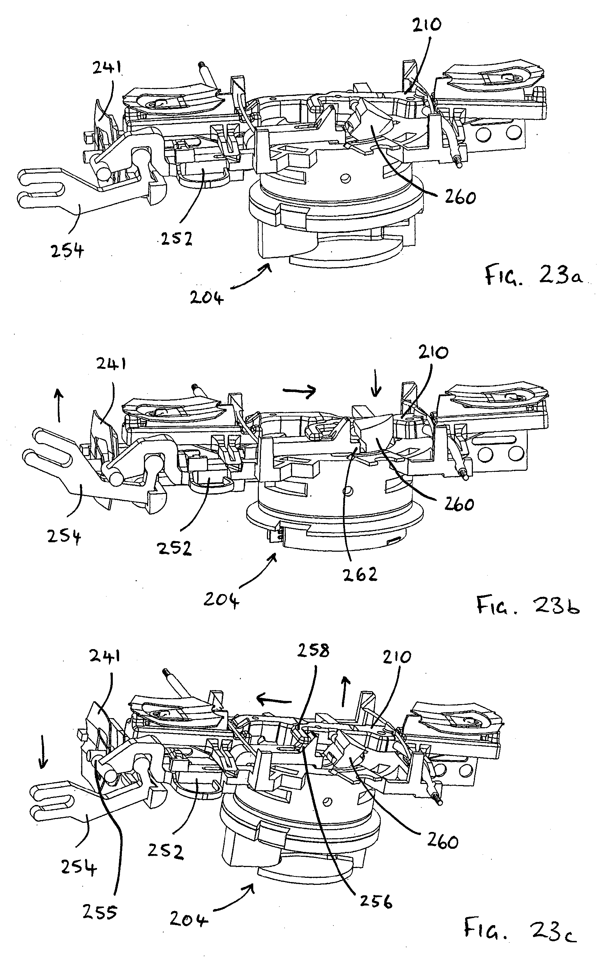

The detail in Fig. 22b shows how the position of the blocking member 260 changes when it is pushed into a disengagement position, allowing the live contact pin 206 to contact the corresponding pin 112' in the base connector part 204. In the blocking position shown in Fig. 22a the blocking member contacts an upper surface of the base connector part 204 at a position offset from its centre of gravity through the pivot point, and thus its own weight tends to push it backwards against the connector part 204 so that it is positively "locked" in this position and not easily disturbed. It will be understood by comparing Figs. 22a and 22b that to disengage the blocking member 260 it must be slid forwards across the surface of the base connector part 204, away from its pivot point, before it is free to pivot upwardly. This movement initially opens the gap between the live contact pins 206, 112', but then allows the blocking member 260 to drop down under its weight to a new disengagement position wherein its lower surface falls down into the annular aperture 130. This allows the switch lever 210 to move downwardly so that the contact pins 206, 112' make electrical contact. The mechanism that moves the blocking member between its blocking position and its disengagement position will now be described with reference to Figs. 23a-23c.

Figs. 23a-23c show how the configuration of the control 200 changes when a user switches on the liquid heating apparatus using the on/off switch 250 (not shown) and its rocker 254 and then the apparatus is switched off, either manually or by operation of the steam sensor. In Fig. 23a the blocking member 260 is seen in its blocking position. In Fig. 23b it can be seen that the on/off rocker 254 has been pulled up so as to push forward the on/off slider 252 as compared to Fig. 23a (a horizontal arrow indicates movement of the slider 252). The forwards movement of the on/off slider 252 causes the push member 262 at its front end to push against the blocking member 260 so that it is swung forwards and able to drop into an annular aperture in the cordless base connector part 204 (as discussed above). With the blocking member 260 now in its disengagement position, downward movement of the live switch lever 210 is no longer blocked and the lever 210 pivots downwards under the bias of its wire spring 211 (the movement of the lever 210 is indicated by a vertical arrow on the right hand side). Downwards pivoting movement of the lever 210 brings the live contact pin 206 into electrical contact with the corresponding fixed contact 112' in the base connector part 204. The electrical circuit is thereby completed and the current can flow via the live wire 214 to the heating element in the apparatus. Power will continue to be supplied through the control 200, under normal operation, either until the steam sensitive bimetallic actuator 241 operates or until the control is manually switched off.

The control 200 provides for automatic switch off upon detecting that liquid being heated in the apparatus has reached boiling. Steam delivered to the bimetallic actuator 241 causes it to reach its operating temperature. The snap action of the actuator 241 results in it pulling on the projection 255 to move the on/off slider 252 backwards so that its cam surface 256 engages against the follower 258 carried by the live switch lever 210, as is seen in Fig. 23c. Backwards movement of the on/off slider 252 therefore pulls the front end of the live lever 210 upwards so that the live contact pin 206 breaks electrical contact (these movements are indicated by arrows). At the same time, the blocking member 260 is provided with space allowing it to drop down under its own weight and again engage against an upper surface of the cordless base connector part 204 in its stable blocking position. This blocking mechanism prevents the control from cycling on and off under the influence of the steam sensitive actuator 241. The bimetal 241 will reset when it cools. If, however, a user switches the control 200 back on while the bimetal is still above its reset temperature, then forwards movement of the slider 252 will force the bimetal 241 to reset its curvature. The control 200 can therefore be reactivated very quickly.

If a user decides to switch off the apparatus before boiling has been detected, upwards movement of the on/off switch 250 acts on the rocker 254 to pull the on/off lever backwards 252 and break the live connection in the same way. Even once the on/off slider 252 is returned to its neutral position by its centralising spring 264, the blocking member 260 ensures that the live lever 210 is blocked in a raised position. Thus a user must manually turn on the control 200 again using the on/off switch 250. It is envisaged that the on/off switch 250 may not be bi-stable as described herein, but may instead function only to switch on the control 200 while a user can manually switch off the apparatus simply by separating it from the cordless base connector part 204.

If the apparatus is lifted during operation so that the upper connector part 202 is lifted away from the base connector part 204, the electrical circuit is broken between the live contact pin 206 and its associated contact member 112' before the neutral ring 208 breaks its contact. This means that only the live contact members 206, 112' may be provided with a layer of silver, or with a relatively thick layer of silver. Furthermore, it may only be necessary to provide one of the live contact members, such as the pin 206, with a layer of silver as the plasma generated during arcing causes the silver to melt and deposit a layer of silver on the surface of the other contact member 112' in use. During normal use of the appliance i.e. in the absence of an overheat position, the neutral switch lever 212 does not move relative to the chassis moulding 246 of the control 200. The neutral contacts are therefore always made/broken, respectively, after/before the live contacts.

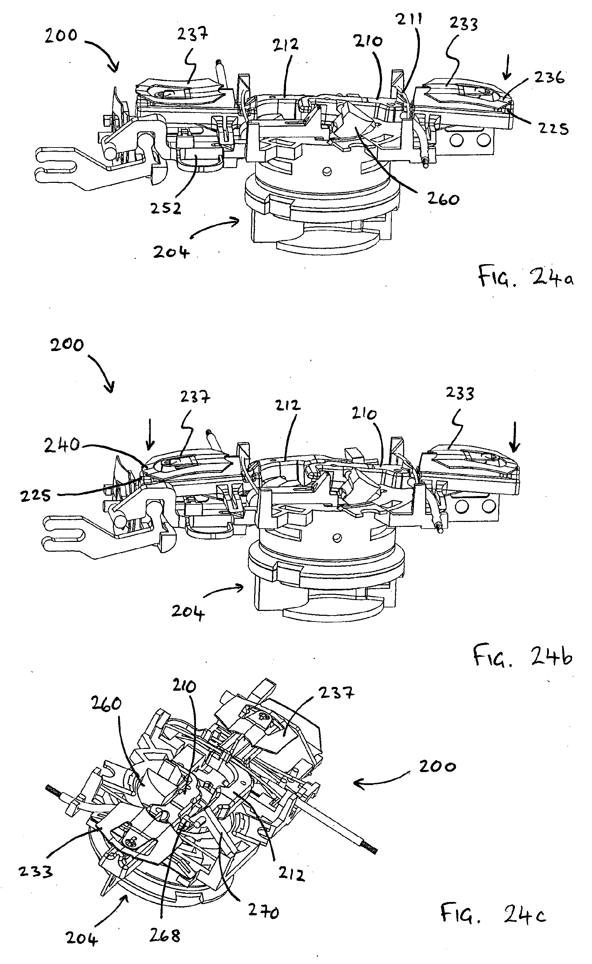

The safety back-up operation of the bimetallic actuators 233, 237 will now be described with reference to Fig. 24a-24c. In the event that the apparatus begins to overheat, for example because it does not contain any liquid or has boiled dry, the primary actuator 233 is arranged to operate before the secondary actuator 237. Fig. 24a shows the configuration of the control 200 when the primary actuator 233 has operated to lift the live switch lever 210. It can be seen that the hoop 236 of the actuator 233 has moved downwardly to contact the protrusion 225 on the live switch lever 210 and pivot the lever 210 against the force of the spring 211 so that the live contact pin 206 breaks electrical contact with the corresponding pin 112' in the base connector part 204. If the apparatus stops overheating once the power supply has been broken then the secondary actuator 237 should not come into use as it is arranged to operate at a higher predetermined temperature condition. Once the actuator 233 has cooled, it reverses its curvature so that it is no longer pressing down on the back of the live switch lever 210 and the lever 210 is then returned under the force of the spring 211. Before the actuator 233 has reset, operation of the on/off switch 250 can not re-make the live contacts as the live switch lever 210 is still held up. Even once the actuator 233 has reset, the blocking member 260 will have swung down to block the lever 210 and prevent the live pin 206 from re-closing the contacts until the control 200 is manually switched on again.

Fig. 24b shows the configuration of the control 200 in the event that overheating takes place very rapidly and/or the apparatus continues to heat up even after operation of the primary actuator 233. In this situation the secondary actuator 237 may independently operate as well, albeit upon sensing a higher temperature, and its hoop 240 can be seen to have moved downwardly to contact the protrusion 225 on the neutral switch lever 212. The lever 212 is pivoted against the force of the spring 213 so that the neutral contact ring 208 breaks electrical contact with the corresponding pin 114' in the base connector part 204. By setting the two overheat sensors 233, 237 to operate at different predetermined temperature conditions it can be ensured that the neutral contacts (which may not be provided with a silver coating) are broken after the live contacts and re-made before the live contacts.

In a fault situation the secondary bimetallic actuator 237 may operate before the primary bimetallic actuator 233, for example due to a failure of the primary actuator 233. In an abnormal overheat condition the latch mechanism that links the two switch levers 210, 212 comes into effect and the control 200 has a configuration as seen in Fig. 24c. Further detail is seen in the stripped down views of Figs. 25a-25c. Before either of the actuators 233, 237 has operated, the both of the switch levers 210, 212 are in a downward position with the contacts closed, as is seen in Fig. 25a. If the primary actuator 233 operates first then the live switch lever 210 is lifted up and the latch keeper 268 carried by the lever 210 is also moved upwardly. If the secondary actuator 237 operates after the primary actuator 233 then the neutral switch lever 212 will also lift and the pivotally mounted latch member 270 will slightly swing down under gravity without engaging the latch keeper 268, as is seen in Fig. 25b.

In an abnormal situation where the primary actuator 233 fails to operate and only the secondary actuator 237 operates, the live lever 210 is down when the neutral lever 212 is raised, and the latch member 270 that is pivotally connected to the neutral switch lever 212 swings down under gravity and engages the keeper 268 on the live lever 210, as is seen in Fig. 25c. This locks the neutral lever 212 out of further movement so that the contacts can not be re-closed. The illustrated latch arrangement also locks the live switch lever 210 in its downward position. The control 200 can not be reset from this configuration, which provides a failsafe back-up. Abnormal operation of the secondary actuator 237 without operation of the primary actuator 233 therefore prevents the control 200 from operating further, i.e. the same result as may conventionally be achieved by providing a separate thermal fuse or similar singular operation device.

There is shown in Fig. 26 a liquid heating apparatus incorporating the control 200 described with respect to Figs. 14-25. As in the earlier example shown in Figs. 10 and 11, the base connector part 204 is arranged centrally of a base stand 104 in a power base unit 100. The power supply cable 106 passes straight out from the underside of the connector part 204 without a serpentine configuration to terminate with a mains plug 108. The permanent attachment of the contacts in the base connector part 204 with the conductors in the power cord 106 ensures that the electrical circuit is not at risk even if the cable 106 is tugged, meaning that a shorter cable 106 can be used.

The upper part of the control is mounted to a heater in the cordless liquid heating vessel 101. It was described above that the upper part of the control 202 includes a datum point 266 on a lower surface thereof which is arranged to bear on the base connector part 204 when the two parts are engaged, i.e. when the heating vessel 101 is placed on the power base unit 100 to receive electrical power from the mains. So that the cordless liquid heating vessel 101 is not unstable when placed on the power base 100, its lower housing 101 a has three resilient feet 103 arranged to bear on the base unit 100 in addition to the datum point 266, thereby providing a tripod arrangement to support the vessel 101. The feet 103 comprise portions of the lower housing 101 a which have been relieved from the rest of the surface to provide sprung cantilevered tongues. Of course, in other embodiments the resilient feet 103 may be replaced by resilient support portions provided on an upper surface of the power base unit 100 instead.

It will be appreciated that the control arrangements described herein may find use in many different kinds of liquid heating apparatus, including electric kettles and water boilers, hot water dispensers, beverage makers and steam irons, of both the corded and cordless varieties. Where reference is made to a sheathed heating element e.g. in an underfloor heater, this could equally apply to a heating track provided by a thick film heating element, as in both cases the sheathed heating element or thick film heating track may be mounted to a heater and/or diffuser plate to provide a planar heater.

## Claims

1. A control assembly (200) for a cordless liquid heating apparatus comprising a control upper part (202) for mounting to the liquid heating apparatus and a cordless base connector part (204) adapted to supply electrical power to the control upper part (202) when the control upper part (202) is placed on top of the cordless base connector part (204); the control assembly (200) further comprising a switch arrangement for making or breaking an electrical circuit for supplying power to the liquid heating apparatus, the switch arrangement comprising: a fixed contact (112', 114') provided on the cordless base connector part (204); **characterised in that** the switch arrangement further comprises a moveable contact member (206, 208) provided on the control upper part (202) and a physical blocking member (260) is arranged so that when the moveable contact member (206, 208) is separated from the fixed contact (112', 114'), the blocking member (260) moves automatically to a blocking position in which it prevents the moveable contact member (206, 208) from making electrical contact with the fixed contact (112', 114').

2. A control assembly (200) as claimed in claim 1, wherein the blocking member (260) is arranged to move under gravity to said blocking position.

3. A control assembly (200) as claimed in any preceding claim, wherein the moveable contact member (206, 208) is mounted on a switch lever (210, 212), and optionally wherein the control upper part (202) comprises resilient means (211, 213), separate from and acting on the switch lever (210, 212), so as to bias the moveable contact member (206, 208) into electrical contact with the fixed contact (112', 114').

4. A control assembly (200) as claimed in claim 3, wherein a temperature-sensitive actuator (233, 237, 241) acts on the switch lever (210, 212) to separate the contacts (206, 208, 112', 114').

5. A control assembly (200)as claimed in any preceding claim, wherein the switch arrangement is used to switch the live pole (206, 112') of the electrical circuit.

6. A control assembly (200) as claimed in any preceding claim, wherein the blocking member (260) is arranged to bear against the moveable contact member (206, 208), or a switch lever (210, 212) carrying the moveable contact member (206, 208), such that the blocking member (260) is held away from its blocking position when the moveable contact member (206, 208) is in contact with the fixed contact (112', 114') but such that when the moveable contact member (206, 208) is separated from the fixed contact (112' 114'), the blocking member (260) is no longer held and so is able to move to said blocking position.

7. A control assembly (200) as claimed in any preceding claim, wherein the moveable contact member (206, 208) is acted on directly or indirectly by a temperature-sensitive actuator (241) which is mounted on the control upper part (202) such that when the control upper part (202) is mounted in a liquid heating apparatus the temperature-sensitive actuator (233, 237) makes thermal contact with, and is sensitive to, the temperature of the liquid heating apparatus, the temperature-sensitive actuator (233, 237) being arranged to act on the moveable contact member (206, 208), or a switch lever (210, 212) to which it is mounted, such that the moveable contact member (206, 208) is moved away from the fixed contact (112', 114') when the liquid heating apparatus reaches a predetermined temperature condition.

8. A control assembly (200) as claimed in any preceding claim, wherein a manually operable means (262) is provided for removing the blocking member (260) and thereby allowing the moveable contact member (206, 208) to make electrical contact with the fixed contact (112', 114').

9. A control assembly (200) as claimed in any preceding claim, wherein the blocking member (260) is arranged such that it moves into the blocking position when the control upper part (202) is lifted from the cordless base connector part (204), and optionally wherein the blocking member (260) remains in the blocking position when the control upper part (202) is replaced on the cordless base connector part (204).

10. A control assembly (200) as claimed in any preceding claim, wherein the blocking member (260) is arranged so that it is urged towards a stable blocking position by the action of placing the control upper part (202) on the cordless base connector part (204) and/or wherein the blocking member (260) is arranged to bear in use on the top of the cordless base connector part (204) when the control upper part (202) is placed or replaced on the cordless base connector part (204).

11. A control assembly (200) as claimed in any preceding claim, wherein the blocking member (260) is arranged such that when it is moved towards a disengagement position to allow the moveable contact member (206, 208) to make electrical contact with the fixed contact (112', 114'), it locates into a recess (130) in the cordless base connector part (204).

12. A control assembly (200) as claimed in any preceding claim, wherein the moveable contact member (206, 208) comprises a silver coating or tip and/or wherein the contact surface of the fixed contact comprises silver (112', 114').

13. A control assembly (200) as claimed in any preceding claim, wherein at least one of the control upper part (202) or cordless base connector part (204) comprises a single datum point (266) disposed on a substrate thereof and arranged in use to bear on the other of the control upper part (202) or cordless base connector part (204) to set an accurate mating separation therebetween, and optionally wherein the datum point (266) is disposed on a substrate of the control upper part (202) and is adapted to bear on a sub-assembly of the cordless base connector part (204) which carries the fixed contact (112', 114').

14. A control assembly (200) as claimed in any preceding claim, wherein the cordless base connector part (204) is of the type that can be brought into engagement with the control upper part (202) regardless, or substantially regardless, of their relative angular orientation.

## Patentansprüche

1. Steueraufbau (200) für eine schnurlose Flüssigkeitserhitzungsvorrichtung, umfassend ein Steueroberteil (202) zur Anbringung an der Flüssigkeitserhitzungsvorrichtung und ein schnurloses Basissteckverbinderteil (204), das dazu ausgelegt ist, dem Steueroberteil (202) elektrischen Strom zu liefern, wenn das Steueroberteil (202) auf dem schnurlosen Basissteckverbinderteil (204) angeordnet ist; wobei der Steueraufbau (200) ferner eine Schaltanordnung umfasst, um einen elektrischen Kreis zur Lieferung von Strom an die Flüssigkeitserhitzungsvorrichtung herzustellen oder zu unterbrechen, wobei die Schaltanordnung einen festen Kontakt (112', 114') umfasst, der an dem schnurlosen Basissteckverbinderteil (204) bereitgestellt ist; **dadurch gekennzeichnet, dass** die Schaltanordnung ferner ein bewegliches Kontaktelement (206, 208) umfasst, das an dem Steueroberteil (202) bereitgestellt ist, und ein physisches Blockierelement (260) so angeordnet ist, dass sich das physische Blockierelement (260) dann, wenn das bewegliche Kontaktelement (206, 208) von dem festen Kontakt (112', 114') getrennt ist, automatisch in eine Blockierstellung bewegt, in der es verhindert, dass das bewegliche Kontaktelement (206, 208) einen elektrischen Kontakt mit dem festen Kontakt (112', 114') herstellt.

2. Steueraufbau (200) nach Anspruch 1, wobei das Blockierelement (260) dazu eingerichtet ist, sich unter Schwerkrafteinwirkung in die Blockierstellung zu bewegen.

3. Steueraufbau (200) nach einem der vorhergehenden Ansprüche, wobei das bewegliche Kontaktelement (206, 208) an einem Umschalthebel (210, 212) angebracht ist, und, optional, wobei das Steueroberteil (202) ein elastisches Mittel (211, 213) umfasst, das von dem Umschalthebel (210, 212) getrennt ist und auf diesen wirkt, um das bewegliche Kontaktelement (206, 208) in einen elektrischen Kontakt mit dem festen Kontakt (112', 114') vorzuspannen.

4. Steueraufbau (200) nach Anspruch 3, wobei ein temperaturempfindlicher Aktuator (233, 237, 241) auf den Umschalthebel (210, 212) wirkt, um die Kontakte (206, 208, 112', 114') zu trennen.

5. Steueraufbau (200) nach einem der vorhergehenden Ansprüche, wobei die Schaltanordnung verwendet wird, um den aktiven Pol (206, 112') des elektrischen Kreises umzuschalten.

6. Steueraufbau (200) nach einem der vorhergehenden Ansprüche, wobei das Blockierelement (260) so angeordnet ist, dass es so an dem beweglichen Kontaktelement (206, 208) oder einem Umschalthebel (210, 212), der das bewegliche Kontaktelement (206, 208) trägt, anliegt, dass das Blockierelement (260), dann, wenn das bewegliche Kontaktelement (206, 208) mit dem festen Kontakt (112', 114') in Kontakt steht, von seiner Blockierstellung entfernt gehalten wird, aber dass das Blockierelement (260) dann, wenn das bewegliche Kontaktelement (206, 208) von dem festen Kontakt (112', 114') getrennt ist, nicht länger gehalten wird und daher in der Lage ist, sich in die Blockierstellung zu bewegen.

7. Steueraufbau (200) nach einem der vorhergehenden Ansprüche, wobei das bewegliche Kontaktelement (206, 208) eine direkte oder indirekte Einwirkung durch einen temperaturempfindlichen Aktuator (241) erfährt, der so an dem Steueroberteil (202) angebracht ist, dass der temperaturempfindliche Aktuator (233, 237) dann, wenn das Steueroberteil (202) in einer Flüssigkeitserhitzungsvorrichtung angebracht ist, einen thermischen Kontakt mit der Flüssigkeitserhitzungsvorrichtung herstellt und auf seine Temperatur reagiert, wobei der temperaturempfindliche Aktuator (233, 237) so angeordnet ist, dass er so auf das bewegliche Kontaktelement (206, 208) oder einen Umschalthebel (210, 212), an dem dieses angebracht ist, einwirkt, dass das bewegliche Kontaktelement (206, 208) von dem festen Kontakt (112', 114') weg bewegt wird, wenn die Flüssigkeitserhitzungsvorrichtung einen vorherbestimmten Temperaturzustand erreicht.

8. Steueraufbau (200) nach einem der vorhergehenden Ansprüche, wobei ein von Hand betätigbares Mittel (262) bereitgestellt ist, um das Blockierelement (260) zu entfernen und dadurch zu gestatten, dass das bewegliche Kontaktelement (206, 208) einen elektrischen Kontakt mit dem festen Kontakt (112', 114') herstellt.

9. Steueraufbau (200) nach einem der vorhergehenden Ansprüche, wobei das Blockierelement (260) so angeordnet ist, dass es sich in die Blockierstellung bewegt, wenn das Steueroberteil (202) von dem schnurlosen Basissteckverbinderteil (204) gehoben wird, und, optional, wobei das Blockierelement (260) in der Blockierstellung bleibt, wenn das Steueroberteil (202) auf dem schnurlosen Basissteckverbinderteil (204) ausgetauscht wird.

10. Steueraufbau (200) nach einem der vorhergehenden Ansprüche, wobei das Blockierelement (260) so angeordnet ist, dass es durch die Wirkung des Anordnens des Steueroberteils (202) an dem schnurlosen Basissteckverbinderteil (204) in eine stabile Blockierstellung gedrängt wird, und/oder wobei das Blockierelement (260) so angeordnet ist, dass es in Verwendung an der Oberseite des schnurlosen Basissteckverbinderteils (204) anliegt, wenn das Steueroberteil (202) auf dem schnurlosen Basissteckverbinderteil (204) angeordnet oder ausgetauscht wird.

11. Steueraufbau (200) nach einem der vorhergehenden Ansprüche, wobei das Blockierelement (260) so angeordnet ist, dass es sich dann, wenn es in eine Lösestellung bewegt wird, um zu gestatten, dass das bewegliche Kontaktelement (206, 208) einen elektrischen Kontakt mit dem festen Kontakt (112', 114') hergestellt, in einer Vertiefung (130) in dem schnurlosen Basissteckverbinderteil (204) platziert.

12. Steueraufbau (200) nach einem der vorhergehenden Ansprüche, wobei das bewegliche Kontaktelement (206, 208) eine Silberbeschichtung oder -spitze umfasst, und/oder wobei die Kontaktfläche des festen Kontakts Silber (112', 114') umfasst.

13. Steueraufbau (200) nach einem der vorhergehenden Ansprüche, wobei zumindest eines aus dem Steueroberteil (202) oder dem schnurlosen Basissteckverbinderteil (204) einen einzelnen Bezugspunkt (266) umfasst, der an einem Substrat davon angeordnet ist und in Verwendung so angeordnet ist, dass er an dem anderen aus dem Steueroberteil (202) oder dem schnurlosen Basissteckverbinderteil (204) anliegt, um eine genau passende Trennung dazwischen festzulegen, und, optional, wobei der Bezugspunkt (266) an einem Substrat des Steueroberteils (202) angeordnet ist und dazu ausgelegt ist, an einem Unteraufbau des schnurlosen Basissteckverbinderteils (204), der den festen Kontakt (112', 114') trägt, anzuliegen.

14. Steueranordnung (200) nach einem der vorhergehenden Ansprüche, wobei das schnurlose Basissteckverbinderteil (204) von jener Art ist, die unabhängig von ihrer relativen winkeligen Ausrichtung mit dem Steueroberteil (202) in Eingriff gebracht werden kann.

## Revendications

1. Ensemble de commande (200) pour un appareil de chauffage de liquides sans fil comprenant une partie supérieure de commande (202) pour montage sur l'appareil de chauffage de liquides et une partie de connexion de base sans fil (204) qui est adaptée pour fournir de l'énergie électrique à la partie supérieure de commande (202) lorsque la partie supérieure de commande (202) est placée par-dessus la partie de connexion de base sans fil (204) ; l'ensemble de commande (200) comprenant en outre un aménagement de commutation pour établir ou rompre un circuit électrique pour l'alimentation en énergie de l'appareil de chauffage de liquides, l'aménagement de commutation comprenant un contact fixe (112', 114') disposé sur la partie de connexion de base sans fil (204) ; **caractérisé en ce que** l'aménagement de commutation comprend en outre un élément de contact mobile (206, 208) disposé sur la partie supérieure de commande (202) et un élément de blocage physique (260) est aménagé de sorte que, lorsque l'élément de contact mobile (206, 208) est séparé du contact fixe (112', 114'), l'élément de blocage (260) se déplace automatiquement dans une position de blocage dans laquelle il empêche l'élément de contact mobile (206, 208) d'établir un contact électrique avec le contact fixe (112', 114').

2. Ensemble de commande (200) selon la revendication 1, dans lequel l'élément de blocage (260) est aménagé pour se déplacer dans ladite position de blocage sous l'effet de la pesanteur.

3. Ensemble de commande (200) selon l'une quelconque des revendications précédentes, dans lequel l'élément de contact mobile (206, 208) est monté sur un levier de commutation (210, 212) et éventuellement dans lequel la partie supérieure de commande (202) comprend des moyens élastiques (211, 213) séparés du levier de commutation (210, 212) et agissant sur celui-ci de manière à presser l'élément de contact mobile (206, 208) en contact électrique avec le contact fixe (112', 114').

4. Ensemble de commande (200) selon la revendication 3, dans lequel un actionneur sensible à la température (233, 237, 241) agit sur le levier de commutation (210, 212) pour séparer les contacts (206, 208, 112', 114').

5. Ensemble de commande (200) selon l'une quelconque des revendications précédentes, dans lequel l'aménagement de commutation est utilisé pour commuter le pôle actif (206, 112') du circuit électrique.

6. Ensemble de commande (200) selon l'une quelconque des revendications précédentes, dans lequel l'élément de blocage (260) est aménagé pour porter contre l'élément de contact mobile (206, 208) ou sur un levier de commutation (210, 212) portant l'élément de contact mobile (206, 208) de sorte que l'élément de blocage (260) soit maintenu écarté de sa position de blocage lorsque l'élément de contact mobile (206, 208) est en contact avec le contact fixe (112', 114'), mais que, lorsque l'élément de contact mobile (206, 208) est séparé du contact fixe (112', 114'), l'élément de blocage (260) ne soit plus maintenu et soit donc à même de se déplacer dans ladite position de blocage.

7. Ensemble de commande (200) selon l'une quelconque des revendications précédentes, dans lequel l'élément de contact mobile (206, 208) est sollicité directement ou indirectement par un actionneur sensible à la température (241) qui est monté sur la partie supérieure de commande (202) de sorte que, lorsque la partie supérieure de commande (202) est montée dans un appareil de chauffage de liquides, l'actionneur sensible à la température (233, 237) établisse un contact thermique avec l'appareil de chauffage de liquides ou soit sensible à la température de celui-ci, l'actionneur sensible à la température (233, 237) étant aménagé pour agir sur l'élément de contact mobile (206, 208) ou sur un levier de commutation (210, 212) sur lequel il est monté de sorte que l'élément de contact mobile (206, 208) soit écarté du contact fixe (112', 114') lorsque l'appareil de chauffage de liquides atteint un état de température prédéterminé.

8. Ensemble de commande (200) selon l'une quelconque des revendications précédentes, dans lequel un moyen actionnable manuellement (262) est prévu pour retirer l'élément de blocage (260) et permettre ainsi à l'élément de contact mobile (206, 208) d'établir un contact électrique avec le contact fixe (112', 114').

9. Ensemble de commande (200) selon l'une quelconque des revendications précédentes, dans lequel l'élément de blocage (260) est aménagé de sorte qu'il se déplace dans la position de blocage lorsque la partie supérieure de commande (202) est soulevée de la partie de connexion de base sans fil (204) et éventuellement dans lequel l'élément de blocage (260) reste dans la position de blocage lorsque la partie supérieure de commande (202) est replacée sur la partie de connexion de base sans fil (204).

10. Ensemble de commande (200) selon l'une quelconque des revendications précédentes, dans lequel l'élément de blocage (260) est aménagé de sorte qu'il soit pressé vers une position de blocage stable par la mise en place de la partie supérieure de commande (202) sur la partie de connexion de base sans fil (204) et/ou dans lequel l'élément de blocage (260) est aménagé pour porter en service sur la partie supérieure de la partie de connexion de base sans fil (204) lorsque la parie supérieure de commande (202) est placée ou replacée sur la partie de connexion de base sans fil (204).

11. Ensemble de commande (200) selon l'une quelconque des revendications précédentes, dans lequel l'élément de blocage (260) est aménagé de sorte que, lorsqu'il est déplacé vers une position de désengagement pour permettre à l'élément de contact mobile (206, 208) d'établir un contact électrique avec le contact fixe (112', 114') il se positionne dans une cavité (130) de la partie de connexion de base sans fil (204).

12. Ensemble de commande (200) selon l'une quelconque des revendications précédentes, dans lequel l'élément de contact mobile (206, 208) comprend un revêtement ou une pointe d'argent et/ou dans lequel la surface de contact du contact fixe comprend de l'argent (112', 114').

13. Ensemble de commande (200) selon l'une quelconque des revendications précédentes, dans lequel au moins l'une de la partie supérieure de commande (202) ou de la partie de connexion de base sans fil (204) comprend un seul point de référence (266) disposé sur son substrat et aménagé en service pour porter sur l'autre de la partie supérieure de commande (202) ou de la partie de connexion de base sans fil (204) pour établir une séparation connexe précise entre elles et éventuellement dans lequel le point de référence (266) est disposé sur un substrat de la partie supérieure de commande (202) et est à même de porter sur un sous-ensemble de la partie de connexion de base sans fil (204) qui porte le contact fixe (112', 114').

14. Ensemble de commande (200) selon l'une quelconque des revendications précédentes, dans lequel la partie de connexion de base sans fil (204) est du type qui peut être amené à s'engager avec la partie supérieure de commande (202) quelle que soit ou sensiblement quelle que soit leur orientation angulaire relative.
